# EUROPEAN PATENT APPLICATION

(11) **EP 4 765 893 A1**
(43) Date of publication of application: **24.06.2026**
(21) Application number: 23948831.5
(22) Date of filing: 15.08.2023
(51) Int. Cl.: H04W 4/20

(54) **COMMUNICATION METHOD AND APPARATUS FOR AMBIENT IOT DEVICE, AND DEVICE AND MEDIUM**

(71) Applicant: GUANGDONG OPPO MOBILE TELECOMMUNICATIONS CORP., LTD., Dongguan, Guangdong 523860 (CN)
(72) Inventor: HU, Rongyi, Dongguan, Guangdong 523860 (CN); CUI, Shengjiang, Dongguan, Guangdong 523860 (CN); XU, Weijie, Dongguan, Guangdong 523860 (CN); ZHANG, Zhi, Dongguan, Guangdong 523860 (CN)
(74) Representative: Novagraaf Technologies
(86) International application number: PCT/CN2023/113195
(87) International publication number: WO 2025/035401

(57) **Abstract**

The present application relates to the field of ambient IoT. Provided are a communication method and apparatus for an ambient IoT device, and a device and a medium. The method is executed by an ambient IoT device, and comprises: an ambient IoT device receiving air interface signaling sent by a first device; and performing data reading and/or data writing on the ambient IoT device on the basis of the air interface signaling. The solution provides a technical solution of data reading and data writing for an ambient IoT device, and data reading and data writing can be completed on the ambient IoT device in combination with a first device, such that data reading alone or data writing alone or simultaneous data reading and data writing can performed on the ambient IoT device, thereby expanding application scenarios.

## Description

### TECHNICAL FIELD

The present disclosure relates to the field of zero-power technology, and in particular, relates to a communication method and apparatus for an ambient Internet of things (IoT) device, a device, and a medium thereof.

### RELATED ART

An ambient IoT device acquires energy for communication by harvesting energy, such as radio-frequency (RF) energy, light energy, thermal energy, mechanical energy, kinetic energy, or the like, from the environment.

In application scenarios, the ambient IoT device may support a data read operation and a data write operation. Designing the data read operation and the data write operation for the ambient IoT device is an urgent problem to be solved.

### SUMMARY

The present disclosure provides a communication method and apparatus for an ambient IoT device, a device, and a medium thereof. The technical solutions are as follows.

According to an aspect of the present disclosure, a communication method for an ambient IoT device is provided. The method is performed by the ambient IoT device, and includes:
receiving air interface signaling from a first device; and
performing at least one of a data read operation or a data write operation on the ambient IoT device based on the air interface signaling.

According to an aspect of the present disclosure, a communication method for an ambient IoT device is provided. The method is performed by a network device, and includes:
transmitting air interface signaling to a second device, wherein the air interface signaling is used to instruct a data read operation or a data write operation on the ambient IoT device; and
receiving at least one of data or a feedback message from the second device, wherein the feedback message is used to indicate a result of at least one of the data read operation or the data write operation on the ambient IoT device.

According to an aspect of the present disclosure, a communication method for an ambient IoT device is provided. The method is performed by an intermediate node device, and includes:
receiving air interface signaling from a network device; and
transmitting the air interface signaling to the ambient IoT device;
wherein the air interface signaling is used to instruct at least one of a data read operation or a data write operation on the ambient IoT device.

According to an aspect of the present disclosure, a communication apparatus for an ambient IoT device is provided. The apparatus includes:
a receiving module, configured to receive air interface signaling from a first device; and
a processing module, configured to perform at least one of a data read operation or a data write operation on the ambient IoT device based on the air interface signaling.

According to an aspect of the present disclosure, a communication apparatus for an ambient IoT device is provided. The apparatus includes:
a transmitting module, configured to transmit air interface signaling to a second device, wherein the air interface signaling is used to instruct a data read operation or a data write operation on the ambient IoT device; and
a receiving module, configured to receive at least one of data or a feedback message from the second device, wherein the feedback message is used to indicate a result of at least one of the data read operation or the data write operation on the ambient IoT device.

According to an aspect of the present disclosure, a communication apparatus for an ambient IoT device is provided. The apparatus includes:
a receiving module, configured to receive air interface signaling from a network device; and
a transmitting module, configured to transmit the air interface signaling to the ambient IoT device;
wherein the air interface signaling is used to instruct at least one of a data read operation or a data write operation on the ambient IoT device.

According to an aspect of the present disclosure, an ambient IoT device is provided. The ambient IoT device includes:
a processor;
a receiver communicably connected to the processor; and
a memory, configured to store one or more instructions executable by the processor,
wherein the receiver is configured to receive air interface signaling from a first device; and the processor is configured to perform at least one of a data read operation or a data write operation on the ambient IoT device based on the air interface signaling.

According to an aspect of the present disclosure, a network device is provided. The network device includes:
a processor;
a transmitter communicably connected to the processor;
a receiver communicably connected to the processor; and
a memory, configured to store one or more instructions executable by the processor,
wherein the transmitter is configured to transmit air interface signaling to a second device, wherein the air interface signaling is used to instruct a data read operation or a data write operation on an ambient IoT device; and the receiver is configured to receive at least one of data or a feedback message from the second device, wherein the feedback message is used to indicate a result of at least one of the data read operation or the data write operation on the ambient IoT device.

According to an aspect of the present disclosure, an intermediate node device is provided. The intermediate node device includes:
a processor;
a transmitter communicably connected to the processor;
a receiver communicably connected to the processor; and
a memory, configured to store one or more instructions executable by the processor,
wherein the receiver is configured to receive air interface signaling from a network device; and the transmitter is configured to transmit the air interface signaling to an ambient IoT device; wherein the air interface signaling is used to instruct at least one of a data read operation or a data write operation on the ambient IoT device.

According to an aspect of the present disclosure, a computer-readable storage medium is provided. The computer-readable storage medium stores one or more executable instructions. The one or more executable instructions, when loaded and executed by a processor, cause the processor to perform the communication method for the ambient IoT device as described above.

According to an aspect of the present disclosure, a chip is provided. The chip includes programmable logic circuitry or one or more programs. The chip is configured to perform the communication method for the ambient IoT device as described above based on the programmable logic circuitry or the one or more programs.

According to an aspect of the present disclosure, a computer program product is provided. The computer program product includes one or more computer instructions stored in a computer-readable storage medium. The one or more computer instructions, when read by a processor of a communication device from the computer-readable storage medium and executed by the processor, cause the communication device to perform the communication method for the ambient IoT device as described above.

The technical solutions according to the embodiments of the present disclosure achieve at least the following beneficial effects.

According to the embodiments of the present disclosure, technical solutions for data reading and data writing for an ambient IoT device are provided, enabling completion of the data read operation and the data write operation on the ambient IoT device in combination with the first device. In addition, the technical solutions allow for performing the data read operation separately, the data write operation separately, or the data read operation and the data write operation simultaneously on the ambient IoT device, thereby expanding application scenarios. The technical solutions may be implemented in various application scenarios such as long-range read and write operations, or short-range read and write operations.

### BRIEF DESCRIPTION OF DRAWINGS

For clear descriptions of the technical solutions according to the embodiments of the present disclosure, the drawings required for describing the embodiments are briefly described hereinafter. It is obvious that the drawings in the following descriptions are merely for illustrating some embodiments of the present disclosure, and those of ordinary skill in the art may derive other drawings based on these drawings without any creative efforts.
FIG. 1 is a schematic diagram of a zero-power communication system according to some embodiments of the present disclosure;
FIG. 2 is a schematic diagram of RF power harvesting in the related art;
FIG. 3 is a schematic diagram of a backscatter communication process in the related art;
FIG. 4 is a schematic diagram of resistive load modulation in the related art;
FIG. 5 is a schematic diagram of an encoding mode in the related art;
FIG. 6 is a schematic diagram of a communication method for an ambient IoT device according to some embodiments of the present disclosure;
FIG. 7 is an interaction diagram of a communication method for an ambient IoT device according to some embodiments of the present disclosure;
FIG. 8 is a schematic diagram of a communication method for an ambient IoT device according to some embodiments of the present disclosure;
FIG. 9 is an interaction diagram of a communication method for an ambient IoT device according to some embodiments of the present disclosure;
FIG. 10 is a schematic diagram of a communication method for an ambient IoT device according to some embodiments of the present disclosure;
FIG. 11 is an interaction diagram of a communication method for an ambient IoT device according to some embodiments of the present disclosure;
FIG. 12 is a schematic diagram of a communication method for an ambient IoT device according to some embodiments of the present disclosure;
FIG. 13 is an interaction diagram of a communication method for an ambient IoT device according to some embodiments of the present disclosure;
FIG. 14 is a schematic diagram of a communication method for an ambient IoT device according to some embodiments of the present disclosure;
FIG. 15 is an interaction diagram of a communication method for an ambient IoT device according to some embodiments of the present disclosure;
FIG. 16 is a schematic diagram of a communication method for an ambient IoT device according to some embodiments of the present disclosure;
FIG. 17 is an interaction diagram of a communication method for an ambient IoT device according to some embodiments of the present disclosure;
FIG. 18 is a schematic diagram of a communication method for an ambient IoT device according to some embodiments of the present disclosure;
FIG. 19 is an interaction diagram of a communication method for an ambient IoT device according to some embodiments of the present disclosure;
FIG. 20 is an interaction diagram of a communication method for an ambient IoT device according to some embodiments of the present disclosure;
FIG. 21 is an interaction diagram of a communication method for an ambient IoT device according to some embodiments of the present disclosure;
FIG. 22 is an interaction diagram of a communication method for an ambient IoT device according to some embodiments of the present disclosure;
FIG. 23 is a flowchart of a communication method for an ambient IoT device according to some embodiments of the present disclosure;
FIG. 24 is a flowchart of a communication method for an ambient IoT device according to some embodiments of the present disclosure;
FIG. 25 is a flowchart of a communication method for an ambient IoT device according to some embodiments of the present disclosure;
FIG. 26 is a block diagram of a communication apparatus for an ambient IoT device according to some embodiments of the present disclosure;
FIG. 27 is a block diagram of a communication apparatus for an ambient IoT device according to some embodiments of the present disclosure;
FIG. 28 is a block diagram of a communication apparatus for an ambient IoT device according to some embodiments of the present disclosure; and
FIG. 29 is a structural schematic diagram of a communication device according to some embodiments of the present disclosure.

### DETAILED DESCRIPTION

For clearer descriptions of the objectives, technical solutions, and advantages of the present disclosure, the embodiments of the present disclosure are described hereinafter in detail with reference to the drawings. The exemplary embodiments are described in detail here, and their examples are shown in the accompanying drawings. When the following description relates to the accompanying drawings, the same reference numerals in different drawings represent the same or similar elements, unless otherwise indicated. The embodiments described in the following exemplary embodiments do not represent all the embodiments consistent with the present disclosure. Rather, these embodiments are merely examples of devices and methods that are consistent with some aspects of the present disclosure as detailed in the appended claims.

The terms used in the present disclosure are solely for the purpose of describing specific embodiments and are not intended to limit the present disclosure. The singular forms "a," "an," and "the" used in the present disclosure and the appended claims are also intended to encompass their plural forms, unless the context clearly indicates otherwise. It should be understood that the term "and/or" as used herein refers to and includes any or all possible combinations of one or more of associated listed items.

It should be understood that although terms such as "first," "second," and "third" may be used in the present disclosure to describe various information, such information should not be limited by these terms. These terms are only used to distinguish information of the same type from each other. For example, without departing from the scope of the present disclosure, first information may also be referred to as second information, and similarly, second information may also be referred to as first information. The term "in a case where" as used herein may be interpreted as "when," "upon," or "in response to determining" depending on the context.

First, communication technologies involved in the embodiments of the present disclosure are introduced hereinafter.

### 1. Brief Introduction of Zero-Power Communication

The zero-power communication may be implemented based on a zero-power IoT. The zero-power IoT may also be referred to as an ambient power enabled IoT (abbreviated as "ambient IoT/A-IoT") or a passive IoT.

A terminal device adopting zero-power communication technology may be referred to as a zero-power device or an ambient IoT/A-IoT device. The ambient IoT/A-IoT device uses various ambient energies, such as RF energy, light energy, solar energy, thermal energy, mechanical energy, or the like, to drive operations of the ambient IoT/A-IoT device. The ambient IoT/A-IoT device may have no energy storage capability, or may have very limited energy storage capability. For example, an ambient IoT/A-IoT device uses a capacitor with a capacity of several tens of microfarads (µF). Compared with other IoT devices, ambient IoT/A-IoT devices have many advantages such as no need for conventional batteries, no maintenance, small size, low complexity, low cost, and long service life.

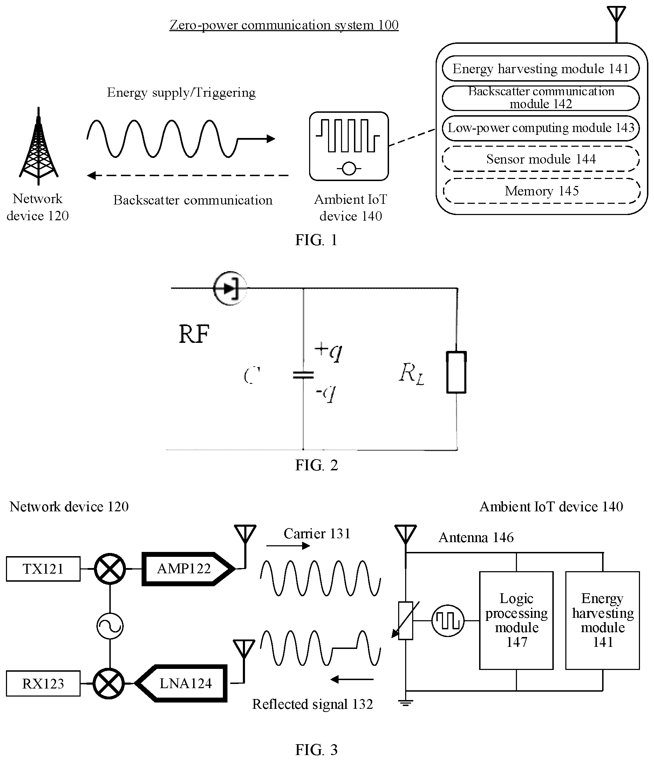

FIG. 1, as illustrated, is a schematic diagram of a zero-power communication system 100 according to some embodiments of the present disclosure. The zero-power communication system 100 includes a network device 120 and an ambient IoT device 140.

The network device 120 is configured to transmit wireless energy supply signals and downlink communication signals to the ambient IoT device 140, and receive backscatter signals from the ambient IoT device 140. The ambient IoT device 140 includes an energy harvesting module 141, a backscatter communication module 142, and a low-power computing module 143. The energy harvesting module 141 is configured to harvest energy carried by radio waves in space to drive the low-power computing module 143 of the ambient IoT device 140 and to cause the backscatter communication module 142 to implement backscatter communication. The ambient IoT device 140, upon harvesting energy, may receive control signals from the network device 120 and transmit data to the network device 120 in a backscatter manner based on the control signals. The transmitted data may be data stored in the ambient IoT device 140 (such as an identity identifier or pre-written information, e.g., a production date, a brand, or a manufacturer of a product).

The ambient IoT device 140 may further include a sensor module 144 and a memory 145. The sensor module 144 may include various types of sensors. The ambient IoT device 140 may report data captured by various sensors based on a zero-power mechanism. The memory 145 is configured to store some basic information (such as item identifiers) or acquire sensing data such as ambient temperature or ambient humidity.

Since the ambient IoT device 140 does not require a battery, and the low-power computing module 143 is configured to implement simple operations such as signal demodulation, decoding/encoding, and modulation, a zero-power module merely requires an extremely simple hardware design, such that the ambient IoT device 140 is produced at a low cost and has a compact size.

The network device 120 includes, but is not limited to: a cellular network device, such as a 5^{th} generation (5G) or 6^{th} generation (6G) network device and a 5G/6G base station device; and a wireless fidelity (Wi-Fi) or wireless local area network (WLAN) network device, such as an access point (AP), a router, a mobile AP, or the like. The mobile AP is, for example, a mobile phone.

The ambient IoT device 140 includes, but is not limited to: a handheld device, a wearable device, a vehicle-mounted device, an IoT device, and the like. The ambient IoT device 140 may be at least one of: a mobile phone, a tablet computer, an e-book reader, a laptop computer, a desktop computer, a television, a game console, an augmented reality (AR) terminal, a virtual reality (VR) terminal, a mixed reality (MR) terminal, a wearable device, a handle, an electronic tag, a controller, or the like.

The technical solutions according to some embodiments of the present disclosure are applicable to various communication systems, such as a global system for mobile communication (GSM) system, a code-division multiple access (CDMA) system, a wideband code-division multiple access (WCDMA) system, a general packet radio service (GPRS) system, a long-term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a WLAN system, a Wi-Fi system, a 5G system, a cellular IoT system, and a cellular passive IoT system. The technical solutions are also applicable to an evolution system subsequent to the 5G NR system, as well as 6G and subsequent evolution systems.

It should be understood that in some embodiments of the present disclosure, "5G" may also be referred to as "5G NR" or "NR."

It should be understood that in the description of the embodiments of the present disclosure, the term "corresponding" may indicate a direct corresponding relationship or an indirect corresponding relationship between two items, or an association relationship between the two items, or a relationship such as indicating and being indicated, configuring and being configured, or the like.

### 2. RF Power Harvesting

FIG. 2 is a schematic principle diagram of RF power harvesting. The RF power harvesting is to harvest, based on the principle of electromagnetic induction, spatial electromagnetic wave energy using an RF module via electromagnetic induction and connection to a capacitor C and a load resistor R_{L} that are connected in parallel, to acquire energy required to drive the ambient IoT device for operation, for example, driving a low-power demodulation module, a modulation module, a sensor, memory read operations, or the like. Therefore, no traditional batteries are required for the ambient IoT device.

### 3. Backscatter Communication

FIG. 3 is a schematic principle diagram of a backscatter communication process. The ambient IoT device 140 receives a wireless signal carrier 131 from a transmitter (TX) 121 of the network device 120 via an amplifier (AMP) 122, modulates the wireless signal carrier 131, loads to-be-transmitted information via a logic processing module 147, and harvests RF energy via the energy harvesting module 141. The ambient IoT device 140 radiates a modulated reflected signal 132 using an antenna 146. This information transmission process is referred to as backscatter communication. A receiver (RX) 123 of the network device 120 receives the modulated reflected signal 132 using a low-noise amplifier (LNA) 124. Backscatter and load modulation functions are inseparable. Load modulation is a process of modulation by adjusting and controlling circuit parameters of an oscillation circuit of the ambient IoT device 140 based on rhythms of data streams to cause parameters such as an impedance size of an electronic tag to change accordingly.

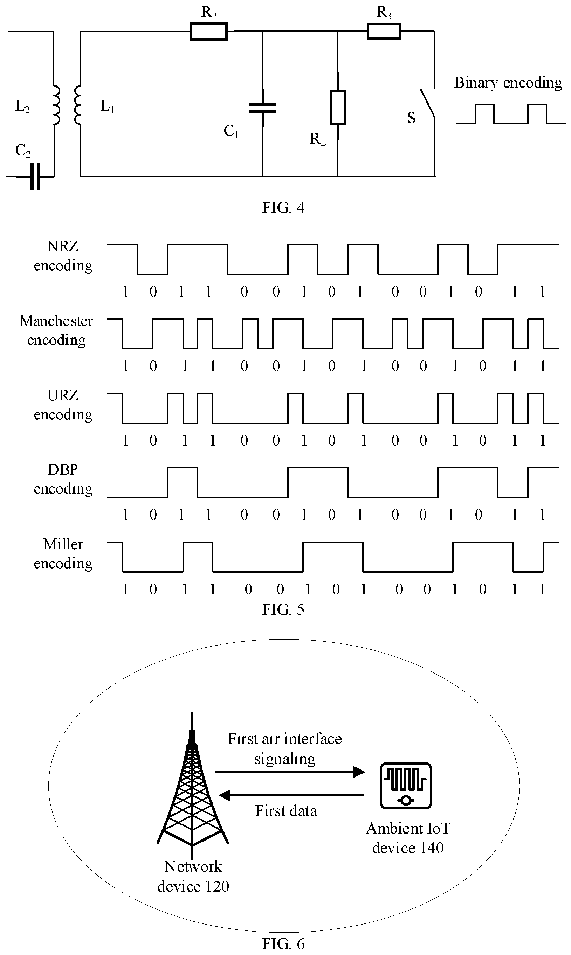

The load modulation technology mainly includes resistive load modulation and capacitive load modulation. FIG. 4 is a schematic principle diagram of resistive load modulation. In the resistive load modulation, a load resistor R_{L} is connected in parallel to a third resistor R₃, a switch S causes a circuit to be turned on or turned off based on binary-encoded control, turn-on or turn-off of the third resistor R₃ may cause a change of voltage on the circuit, the load resistor R_{L} is connected in parallel to a first capacitor C₁, the load resistor R_{L} is connected in series to a second resistor R₂, and the second resistor R₂ is connected in series to a first inductor L₁. The first inductor L₁ is coupled to a second inductor L₂, and the second inductor L₂ is connected in series to a second capacitor C₂. In this way, amplitude shift keying (ASK) may be implemented. That is, signal modulation and signal transmission are implemented by adjusting an amplitude of the backscatter signal from the ambient IoT device. Similarly, in the capacitive load modulation, a resonant frequency of a circuit may be changed based on turn-on or turn-off of a capacitor, such that frequency shift keying (FSK) is implemented. That is, signal modulation and signal transmission are implemented by adjusting an operating frequency of the backscatter signal from the ambient IoT device.

The ambient IoT device carries out information modulation on an incoming signal via load modulation, such that the backscatter communication process is implemented. The ambient IoT device has the following significant advantages: the device does not actively transmit any signal, and thus a complex RF link, such as a power amplifier (PA) and an RF filter in the RF link, is not required; the device is not required to actively generate any high-frequency signal, and thus a high-frequency crystal oscillator is not required; and the device carries out signal transmission by backscatter communication, without consuming energy of the device.

### 4. Application Scenarios of Zero-Power Communication

Due to significant advantages such as extremely low cost, extremely low power consumption, and small size, the zero-power communication is widely applicable in various industries, such as logistics, intelligent warehousing, smart agriculture, energy and power, industrial internet, and the like for vertical industries; and is also applicable in personal applications, such as smart wearables and smart home.

For example, the zero-power communication is at least applicable to the following four scenarios:
(1) object identification, such as logistics management, management of production line products, and supply chain management.
(2) environmental monitoring, such as monitoring of temperature, humidity, and harmful gases in an operating environment and a natural environment.
(3) positioning, such as indoor positioning, intelligent object tracking, and positioning of production line items.
(4) intelligent control, such as intelligent control of various appliances in smart homes (e.g., turning on/off air conditioners and adjusting temperature) and intelligent control of various facilities in agricultural greenhouses (e.g., automatic irrigation and fertilization).

### 5. Encoding Schemes of Zero-Power Communication

FIG. 5 is a schematic diagram of an encoding scheme in zero-power communication. For data transmitted by electronic tags, a binary "1" and a binary "0" may be represented using different forms of encoding. An RF identification (RFID) system generally adopts one of: non-return-to-zero (NRZ) encoding, Manchester encoding, unipolar return-to-zero (URZ) encoding, differential binary phase (DBP) encoding, Miller encoding, or differential encoding. That is, 0 and 1 may be represented using different pulse signals.
- In NRZ encoding, a binary "1" is represented by a high level, and a binary "0" is represented by a low level. NRZ encoding in FIG. 5 is a schematic diagram of levels of binary data 101100101001011 encoded by NRZ encoding.
- Manchester encoding is also referred to as split-phase encoding. In Manchester encoding, a binary value is represented by a transition (rising or falling) in a level in the middle of a bit period. A negative transition in the middle of the bit period represents a binary "1", and a positive transition in the middle of the bit period represents a binary "0". A data transmission error is defined as a condition where, upon simultaneous transmission of data bits with conflicting values from a plurality of electronic tags, the corresponding rising and falling edges within the received signal mutually cancel. This cancellation results in a continuous carrier signal being present for the full duration of the bit. In Manchester encoding, a state without any transition is absent within the bit period. A reader/writer may determine, based on the error, a specific location where a collision occurs. The Manchester encoding facilitates the detection of errors in data transmission, and is generally used for data transmission from an electronic tag to a reader/writer in a case where load modulation or backscatter modulation of carriers is adopted. Manchester encoding in FIG. 5 is a schematic diagram of levels of binary data 101100101001011 encoded by the Manchester encoding.
- In URZ encoding, a binary "1" is represented by a high level in a leading half bit period of URZ encoding, and a binary "1" is represented by a low-level signal that lasts for a next entire bit period. URZ encoding in FIG. 5 is a schematic diagram of levels of binary data 101100101001011 encoded by URZ encoding.
- In DBP encoding, a binary "0" is represented by the presence of any edge (transition) in a half bit period, and the absence of an edge represents a binary "1". In addition, levels are inverted at the beginning of each bit period. For a receiver, a bit clock is relatively easy to be reconstructed. DBP encoding in FIG. 5 is a schematic diagram of levels of binary data 101100101001011 encoded by DBP encoding.
- In Miller encoding, a binary "1" is represented by the presence of any edge (transition) in a half bit period, and a binary "0" is represented by a constant level throughout a next bit period. In addition, a level transition occurs at the beginning of a bit period. For a receiver, a bit clock is relatively easy to be reconstructed. Miller encoding in FIG. 5 is a schematic diagram of levels of binary data 101100101001011 encoded by the Miller encoding.
- In differential encoding, each binary "1" to be transmitted may cause a change in signal level, while for a binary "0," the signal level remains unchanged.

It should be noted that the encoding schemes are provided as examples of encoding schemes in the zero-power communication, and are not intended to limit the present disclosure.

### 6. Types of Ambient IoT Devices (Classified by Energy Sources and Usage Modes)

### (1) Passive Ambient IoT Device

The passive ambient IoT device does not require a built-in battery. As the ambient IoT device approaches to a network device, the ambient IoT device enters a near-field range formed by radiation of an antenna of the network device. In some embodiments, the network device is a reader/writer of an RFID system. Therefore, an antenna of the ambient IoT device generates an induced current via electromagnetic induction, and the induced current drives a low-power chip circuit of the ambient IoT device to implement demodulation of a forward link signal and modulation of a reverse link signal. For a backscatter link, the ambient IoT device carries out signal transmission via backscattering or ultra-low-power active transmission. The passive ambient IoT device does not require a built-in battery for driving for either the forward link or the reverse link, and thus, the passive ambient IoT device is a true zero-power device. The passive ambient IoT device does not require any battery, and an RF circuit and a baseband circuit of the passive ambient IoT device are very simple. For example, the passive ambient IoT device does not require components such as an LNA, a PA, a crystal oscillator, and an analog-to-digital converter (ADC), and has many advantages such as small size, light weight, very low cost, and long service life.

### (2) Semi-passive Ambient IoT Device

The semi-passive ambient IoT device is not equipped with any conventional battery, and may harvest radio wave energy by an RF energy harvesting module, and store the harvested energy in an energy storage unit. In some embodiments, the energy storage unit is a capacitor. Upon acquiring the energy, the energy storage unit may drive a low-power chip circuit of the ambient IoT device to implement demodulation of a forward link signal and modulation of a reverse link signal. For a backscatter link, the ambient IoT device carries out signal transmission via backscattering or ultra-low-power active transmission.

The semi-passive ambient IoT device does not require any built-in battery for driving either for the forward link or the reverse link, and energy stored in the capacitor used by the semi-passive ambient IoT device in operation originates from the radio wave energy harvested by the RF energy harvesting module. Therefore, the semi-passive ambient IoT device is also a true zero-power device. The semi-passive ambient IoT device inherits many advantages of the passive ambient IoT device, such as small size, light weight, very low cost, and long service life.

### (3) Active Ambient IoT Device

The ambient IoT device used in some scenarios is an active ambient IoT device. The active ambient IoT device may be equipped with a built-in battery. The battery is configured to drive a low-power chip circuit of the ambient IoT device to implement demodulation of a forward link signal and modulation of a reverse link signal. For a backscatter link, the ambient IoT device carries out signal transmission via backscattering or ultra-low-power active transmission. However, the "zero power" characteristic of the active ambient IoT device is primarily reflected in that signal transmission in the reverse link does not consume the active ambient IoT device's own power, but instead relies on backscattering. In the active ambient IoT device, the built-in battery supplies power to an RFID chip, and thus a read/write range of a tag is increased and reliability of communication is improved. Therefore, the active ambient IoT device is applicable to some scenarios with relatively high requirements for a communication range, a read latency, or the like.

### 7. Types of Ambient IoT Devices (Classified by Type of Transmitter)

### (1) Ambient IoT Device Based on Backscattering

Such an ambient IoT device carries out uplink data transmission using a backscattering method as described above. Such an ambient IoT device does not have an active transmitter for active transmission but only has a transmitter for backscattering. Therefore, during uplink data transmission, such an ambient IoT device requires a network device to provide carriers, and implements uplink data transmission via carrier-based backscattering.

### (2) Ambient IoT Device Based on Active Transmitter

Such an ambient IoT device has an active transmitter with active transmission capabilities for uplink data transmission. During uplink data transmission, such an ambient IoT device is able to transmit uplink data using its own active transmitter, without relying on a network device to provide carriers. An active transmitter applicable to such an ambient IoT device may be an ultra-low-power ASK transmitter, an ultra-low-power FSK transmitter, or the like. Based on current implementations, the overall power consumption of such a transmitter may be reduced to a range from 400 microwatts to 600 microwatts during transmission of a 100-microwatt signal by the transmitter.

### (3) Ambient IoT Device with Both Backscattering and Active Transmitter Capabilities

Such an ambient IoT device supports both backscatter functionality and active transmitter functionality. The ambient IoT device determines whether to perform active transmission using an active transmitter or perform backscattering, depending on different situations (such as different battery levels or different available environment energy sources) or based on scheduling of a network device.

### 8. Cellular IoT

The rapid development of the cellular IoT based on IoT technologies such as narrow band-IoT (NB-IoT), machine-type communications (MTC), or reduced capability (RedCap), which have been standardized in the 3rd Generation Partnership Project (3GPP), results in IoT communication requirements across various scenarios remaining unmet. These scenarios are illustrated as follows.

### •Strict Communication Environment

In some IoT scenarios, devices may be exposed to extreme environmental conditions such as high temperatures, extremely low temperatures, high humidity, high voltage, high radiation, or high-speed motion. Such scenarios include extra-high voltage (EHV) substations, monitoring of high-speed train track, environmental monitoring in polar regions, industrial production lines, and the like. In these scenarios, existing IoT terminal devices cannot operate due to operating environment restrictions of conventional power supplies. In addition, the extreme operating environment is unfavorable for the maintenance of the IoT terminal devices, e.g., battery replacement.

### •Requirements for Ultra-small Size of Terminals

In some IoT scenarios, such as food traceability, commodity circulation, and smart wearables, a terminal is required to be manufactured with an ultra-small size for convenient use in these scenarios. For example, an IoT terminal device is usually in the form of an electronic tag for commodity management in a circulation process, and the IoT terminal device is embedded in commodity packaging in a very compact form. For another example, a lightweight wearable IoT terminal device improves user experience while meeting user demands.

### •Requirements for Ultra-low-cost IoT Communication

In numerous IoT communication scenarios, an IoT terminal device is required to be produced at sufficiently low cost to enhance competitiveness relative to other alternative techniques. For example, in logistics or warehousing scenarios, an IoT terminal device may be attached to each item to facilitate the management of a large volume of items in circulation, thereby achieving precise management of the entire logistics process and lifecycle by means of the communication between the IoT terminal device and a logistics network. These scenarios require the price of the IoT terminal device to be sufficiently competitive.

Therefore, an IoT that has ultra-low cost and an ultra-small size and is battery-free/maintenance-free requires to be developed in the cellular IoT to meet these IoT communication requirements. The zero-power IoT may perfectly meet these requirements.

In application scenarios of the zero-power communication, an ambient IoT device may support data reading and data writing for a receiver to read data from the ambient IoT device and for a transmitter or a dedicated device to write data to the ambient IoT device.

For the ambient IoT device, a huge difference in required energy or power is present between a data read process and a data write process. Reading data from the ambient IoT device consumes less energy or requires smaller power. However, writing data to the ambient IoT device, especially during data storage (e.g., storing data to be written using a static random-access memory (SRAM), a non-volatile random-access memory (NVRAM) or the like), requires energy consumption nearly equivalent to that of other modules in a communication process, which demands higher energy consumption or power levels than that required for data reading. For an ambient IoT device harvesting energy based on RF signals, a very high power is required to be provided by RF for data writing. In a case where a network device simultaneously reads data from the ambient IoT device and writes data to the ambient IoT device, a very high power is required to be provided for data writing, which is difficult to be achieved in most application scenarios (such as long-range read/write operations).

Designing data read operations and data write operations for ambient IoT devices is crucial. Description is given hereinafter according to the embodiments with respect to the overall process of data reading and data writing for ambient IoT devices, as well as other designs in the process of data reading and data writing, respectively.

First, brief explanations are provided hereinafter for terms involved in the embodiments.

**An intermediate node device** refers to a device configured to assist a network device in performing a data read operation and/or a data write operation on an ambient IoT device. In some embodiments, the intermediate node device includes at least one of: a terminal device, a smart phone, a customer premise equipment (CPE), a base station device, or a handheld device.

**Air interface signaling** refers to signaling used to instruct a data read operation and/or a data write operation on an ambient IoT device. In the following embodiments, the air interface signaling is named according to whether the air interface signaling instructs the data read operation or the data write operation.

**First air interface signaling** refers to air interface signaling used to instruct a data read operation on an ambient IoT device. The first air interface signaling may specifically include the following signaling during a data read process for the ambient IoT device: air interface signaling transmitted from a network device to the ambient IoT device, air interface signaling transmitted from a network device to an intermediate node device, and air interface signaling transmitted from an intermediate node device to the ambient IoT device. It should be understood that communication links corresponding to the first air interface signaling involved in different transmission steps may be the same or different, and information carried by the first air interface signaling involved in different transmission steps may be the same, partially the same, or completely different.

**Second air interface signaling** refers to air interface signaling used to instruct a data write operation on an ambient IoT device. The second air interface signaling may specifically include the following signaling during a data write process for the ambient IoT device: air interface signaling transmitted by a dedicated device to the ambient IoT device, air interface signaling transmitted by a network device to the ambient IoT device, air interface signaling transmitted by a network device to an intermediate node device, and air interface signaling transmitted by an intermediate node device to the ambient IoT device. It should be understood that communication links corresponding to the second air interface signaling involved in different transmission steps may be the same or different, and information carried by the second air interface signaling involved in different transmission steps may be the same, partially the same, or completely different.

**First data** refers to device data reported by an ambient IoT device. The first data may specifically include the following data during a data read process for the ambient IoT device: data transmitted by the ambient IoT device to a network device, data transmitted by the ambient IoT device to an intermediate node device, and data of the ambient IoT device forwarded by an intermediate node device to a network device.

**Second data** refers to data directly written to an ambient IoT device by a dedicated device, or data written to an ambient IoT device by an intermediate node device under the coordination of a network device. The second data may specifically include the following data during a data write process for the ambient IoT device: data written to the ambient IoT device by a dedicated device, or data written to the ambient IoT device by an intermediate node device under the coordination of a network device, wherein the data write operation is initiated by the network device and/or the intermediate node device.

**Third data** refers to data written to an ambient IoT device by an intermediate node device during a data write process for the ambient IoT device that is performed jointly by a network device and the intermediate node device. Specifically, the network device and/or the intermediate node device initiates a data write operation, the network device and the intermediate node device jointly perform the data write operation on the ambient IoT device, and then data is written to the ambient IoT device by the intermediate node device.

**Fourth data** refers to data written to an ambient IoT device by a network device during a data write process for the ambient IoT device that is performed jointly by the network device and an intermediate node device. Specifically, the network device and/or the intermediate node device initiates a data write operation, the network device and the intermediate node device jointly perform the data write operation on the ambient IoT device, and then data is written to the ambient IoT device by the network device.

**A feedback message,** which is also referred to feedback information, is used to indicate a result of a data read operation and/or a data write operation on an ambient IoT device. The feedback message may specifically include: a feedback message from the ambient IoT device to a network device, a feedback message from the ambient IoT device to an intermediate node device, and a feedback message forwarded by an intermediate node device to a network device.

The overall process of a data read operation and a data write operation on an ambient IoT device is introduced hereinafter.

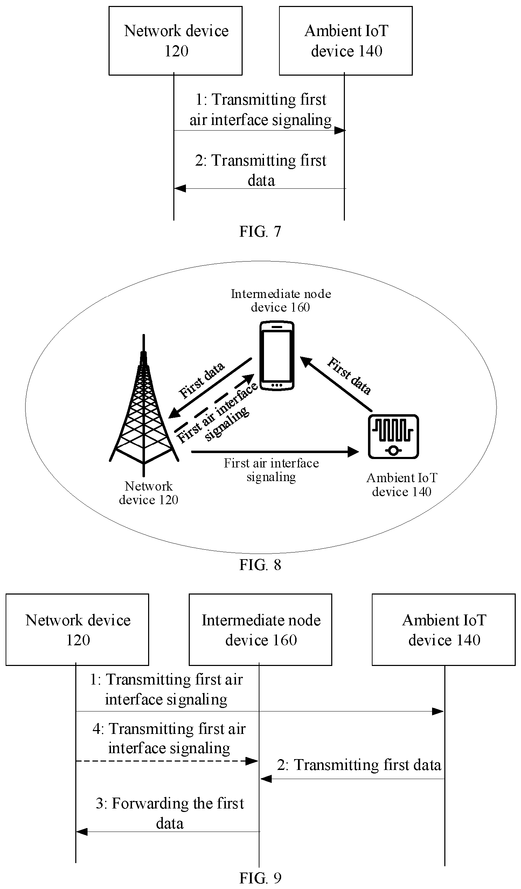

FIG. 6 is a schematic diagram of a communication method for an ambient IoT device according to some embodiments of the present disclosure. FIG. 7 is an interaction diagram of a communication method for an ambient IoT device according to some embodiments of the present disclosure.

A network device performs a data read operation on an ambient IoT device, which includes step 1 and step 2.

In step 1, the network device transmits first air interface signaling to the ambient IoT device.

The first air interface signaling is used to instruct a data read operation on the ambient IoT device.

In step 2, the ambient IoT device transmits first data to the network device.

In some embodiments, the first air interface signaling in the embodiments carries at least one of:
- an identifier of the data read operation;
- a device identifier of the ambient IoT device;
- a temporary key that authorizes the data read operation on the ambient IoT device;
- a signal structure and/or signal content for performing the data read operation on the ambient IoT device; or
- an identifier for performing the data read operation on the ambient IoT device.

In a case where a distance between the network device and the ambient IoT device is relatively long, these embodiments cause the network device to directly read data from the ambient IoT device, thereby achieving "long-range reading and long-range feedback."

FIG. 8 is a schematic diagram of a communication method for an ambient IoT device according to some embodiments of the present disclosure. FIG. 9 is an interaction diagram of a communication method for an ambient IoT device according to some embodiments of the present disclosure.

An intermediate node device assists a network device in performing a data read operation on an ambient IoT device, which includes step 1, step 2, and step 3.

In step 1, the network device transmits first air interface signaling to the ambient IoT device.

The first air interface signaling is used to instruct a data read operation on the ambient IoT device.

In step 2, the ambient IoT device transmits first data to the intermediate node device.

In step 3, the intermediate node device forwards the first data of the ambient IoT device to the network device.

In some embodiments, step 4 may further be provided. In step 4, the network device transmits the first air interface signaling to the intermediate node device, wherein the first air interface signaling further carries one or more configuration parameters for the intermediate node device to perform data forwarding.

In some embodiments, step 4 is required to be performed prior to step 3 or simultaneously with step 3. In some embodiments, step 4 is performed following step 1 or simultaneously with step 1; step 4 is performed following step 2 or simultaneously with step 2; or step 4 is performed simultaneously with step 3. In some embodiments, step 1 may be replaced by the combination of step 1 and step 4; step 2 may be replaced by the combination of step 2 and step 4; or step 3 may be replaced by the combination of step 3 and step 4.

In some embodiments, the process in which the intermediate node device assists the network device in performing the data read operation on the ambient IoT device may include step 1, step 2, and step 3, include step 1, step 4, step 2, and step 3, or include step 1, step 2, step 4, and step 3.

In some embodiments, in an actual application scenario, the network device is required to read data from the ambient IoT device in a case where a deployment range of the network device includes the ambient IoT device and the intermediate node device. The network device may transmit a data reading signal to the ambient IoT device via broadcast. Upon receiving the data of the ambient IoT device, the intermediate node device processes and integrates the data of the ambient IoT device and forwards the processed and integrated data to the network device.

In some embodiments, the first air interface signaling in the embodiments carries at least one of:
- an identifier of the data read operation;
- a device identifier of the ambient IoT device;
- a temporary key that authorizes the data read operation on the ambient IoT device;
- a signal structure and/or signal content for performing the data read operation on the ambient IoT device;
- an identifier for performing the data read operation on the ambient IoT device;
- an identifier of the intermediate node device; or
- one or more configuration parameters for the intermediate node device to perform data forwarding.

In a case where a distance between the network device and the ambient IoT device is relatively long and a distance between the intermediate node device and the ambient IoT device is relatively short, these embodiments cause the network device to read data from the ambient IoT device with the assistance of the intermediate node device, thereby achieving "long-range reading and short-range feedback."

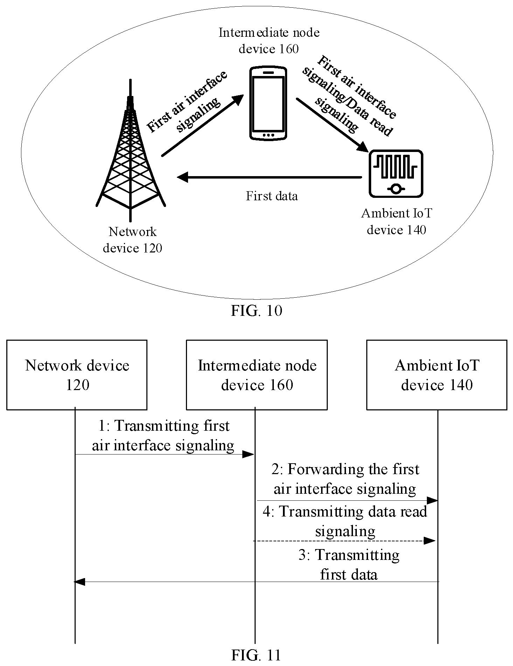

FIG. 10 is a schematic diagram of a communication method for an ambient IoT device according to some embodiments of the present disclosure. FIG. 11 is an interaction diagram of a communication method for an ambient IoT device according to some embodiments of the present disclosure.

An intermediate node device assists a network device in performing a data read operation on an ambient IoT device, which includes step 1, step 2, and step 3.

In step 1, the network device transmits first air interface signaling to the intermediate node device.

The first air interface signaling is used to instruct a data read operation on the ambient IoT device.

In step 2, the intermediate node device forwards the first air interface signaling to the ambient IoT device.

In step 3, the ambient IoT device transmits first data to the network device.

In some embodiments, step 2 in the embodiments may be replaced by step 4. In step 4, the intermediate node device generates data read signaling based on the first air interface signaling, and the intermediate node device transmits the data read signaling to the ambient IoT device.

In some embodiments, the process in which the intermediate node device assists the network device in performing the data read operation on the ambient IoT device may include step 1, step 2, and step 3, or include step 1, step 4, and step 3.

In some embodiments, the first air interface signaling in the embodiments carries at least one of:
- an identifier of the data read operation;
- a device identifier of the ambient IoT device;
- a temporary key that authorizes the data read operation on the ambient IoT device;
- a signal structure and/or signal content for performing the data read operation on the ambient IoT device;
- an identifier for performing the data read operation on the ambient IoT device; or
- an identifier of the intermediate node device.

In some embodiments, the data read signaling in the embodiments carries at least one of:
- an identifier of the data read operation;
- a device identifier of the ambient IoT device;
- a temporary key that authorizes the data read operation on the ambient IoT device;
- a signal structure and/or signal content for performing the data read operation on the ambient IoT device;
- an identifier for performing the data read operation on the ambient IoT device; or
- an identifier of the intermediate node device.

In a case where a distance between the network device and the ambient IoT device is relatively long and a distance between the intermediate node device and the ambient IoT device is relatively short, these embodiments cause the network device to read data from the ambient IoT device with the assistance of the intermediate node device, thereby achieving "short-range reading and long-range feedback."

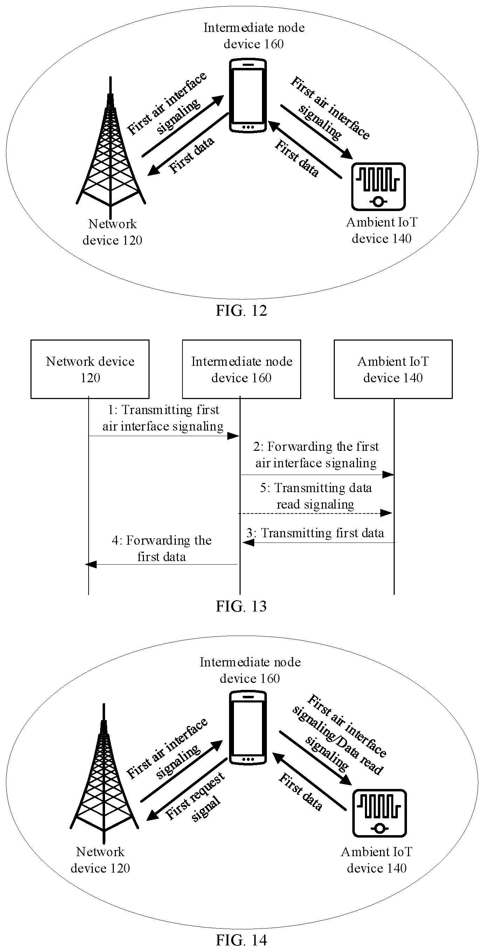

FIG. 12 is a schematic diagram of a communication method for an ambient IoT device according to some embodiments of the present disclosure. FIG. 13 is an interaction diagram of a communication method for an ambient IoT device according to some embodiments of the present disclosure.

An intermediate node device assists a network device in performing a data read operation on an ambient IoT device, which includes step 1, step 2, step 3, and step 4.

In step 1, the network device transmits first air interface signaling to the intermediate node device.

The first air interface signaling is used to instruct a data read operation on the ambient IoT device.

In step 2, the intermediate node device forwards the first air interface signaling to the ambient IoT device.

In step 3, the ambient IoT device transmits first data to the intermediate node device.

In step 4, the intermediate node device forwards the first data of the ambient IoT device to the network device.

In some embodiments, step 2 in the embodiments may be replaced by step 5. In step 5, the intermediate node device generates data read signaling based on the first air interface signaling, and the intermediate node device transmits the data read signaling to the ambient IoT device.

In some embodiments, the process in which the intermediate node device assists the network device in performing the data read operation on the ambient IoT device may include step 1, step 2, step 3, and step 4, or include step 1, step 5, step 3, and step 4.

In some embodiments, the first air interface signaling in the embodiments carries at least one of:
- an identifier of the data read operation;
- a device identifier of the ambient IoT device;
- a temporary key that authorizes the data read operation on the ambient IoT device;
- a signal structure and/or signal content for performing the data read operation on the ambient IoT device;
- an identifier for performing the data read operation on the ambient IoT device; or
- an identifier of the intermediate node device.

In a case where a distance between the network device and the ambient IoT device is relatively long and a distance between the intermediate node device and the ambient IoT device is relatively short, these embodiments cause the network device to read data from the ambient IoT device with the assistance of the intermediate node device, thereby achieving "short-range reading and short-range feedback."

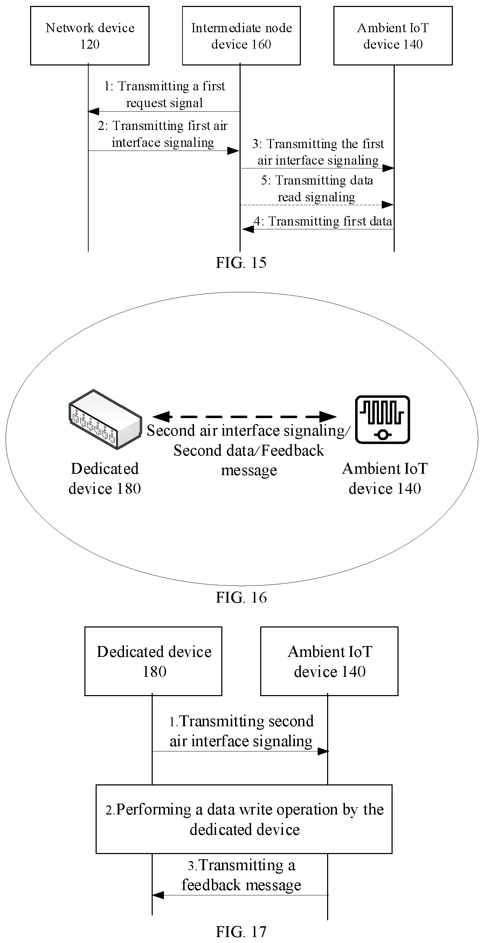

FIG. 14 is a schematic diagram of a communication method for an ambient IoT device according to some embodiments of the present disclosure. FIG. 15 is an interaction diagram of a communication method for an ambient IoT device according to some embodiments of the present disclosure.

An intermediate node performs a data read operation on an ambient IoT device, which includes step 1, step 2, step 3, and step 4.

In step 1, the intermediate node device transmits a first request signal to a network device.

The first request signal is used to request a data read operation on the ambient IoT device, wherein the first request signal is also referred to as a data reading request signal.

In step 2, the network device transmits first air interface signaling to the intermediate node device based on the first request signal.

The first air interface signaling is used to instruct the data read operation on the ambient IoT device, and the first air interface signaling further carries one or more configuration parameters for the data read operation on the ambient IoT device.

In step 3, the intermediate node device forwards the first air interface signaling to the ambient IoT device.

In step 4, the ambient IoT device transmits first data to the intermediate node device.

In some embodiments, step 3 in the embodiments may be replaced by step 5. In step 5, the intermediate node device generates data read signaling based on the first air interface signaling, and the intermediate node device transmits the data read signaling to the ambient IoT device.

In some embodiments, the data read operation on the ambient IoT device performed by the intermediate node device includes step 1, step 2, step 3, and step 4, or includes step 1, step 2, step 5, and step 4.

In some embodiments, the first air interface signaling in the embodiments carries at least one of:
- an identifier of the data read operation;
- a device identifier of the ambient IoT device;
- a temporary key that authorizes the data read operation on the ambient IoT device;
- a signal structure and/or signal content for performing the data read operation on the ambient IoT device;
- an identifier for performing the data read operation on the ambient IoT device;
- an identifier of the intermediate node device; or
- one or more configuration parameters for the intermediate node device to perform the data read operation on the ambient IoT device.

In some embodiments, the data read signaling in the embodiments carries at least one of:
- an identifier of the data read operation;
- a device identifier of the ambient IoT device;
- a temporary key that authorizes the data read operation on the ambient IoT device;
- a signal structure and/or signal content for performing the data read operation on the ambient IoT device;
- an identifier for performing the data read operation on the ambient IoT device; or
- an identifier of the intermediate node device.

In the embodiments, the intermediate node device may also directly read data from the ambient IoT device.

FIG. 16 is a schematic diagram of a communication method for an ambient IoT device according to some embodiments of the present disclosure. FIG. 17 is an interaction diagram of a communication method for an ambient IoT device according to some embodiments of the present disclosure. FIGS. 16 and 17 involve a dedicated device 180.

The dedicated device performs a data write operation on an ambient IoT device, which includes step 1, step 2, and step 3.

In step 1, the dedicated device transmits second air interface signaling to the ambient IoT device.

The second air interface signaling is used to instruct a data write operation on the ambient IoT device.

In step 2, the dedicated device performs the data write operation on the ambient IoT device, and the ambient IoT device stores second data written by the dedicated device.

In step 3, the ambient IoT device transmits a feedback message to the dedicated device.

The feedback message is used to indicate a result of the data write operation on the ambient IoT device.

In some embodiments, the second air interface signaling in the embodiments carries at least one of:
- a device identifier of the dedicated device;
- an identifier of the data write operation;
- data to be written (i.e., the second data);
- a device identifier of the ambient IoT device;
- a temporary key that authorizes the data write operation on the ambient IoT device;
- a signal structure and/or signal content for performing the data write operation on the ambient IoT device; or
- an identifier for performing the data write operation on the ambient IoT device.

In the embodiments, the dedicated device may directly write data to the ambient IoT device.

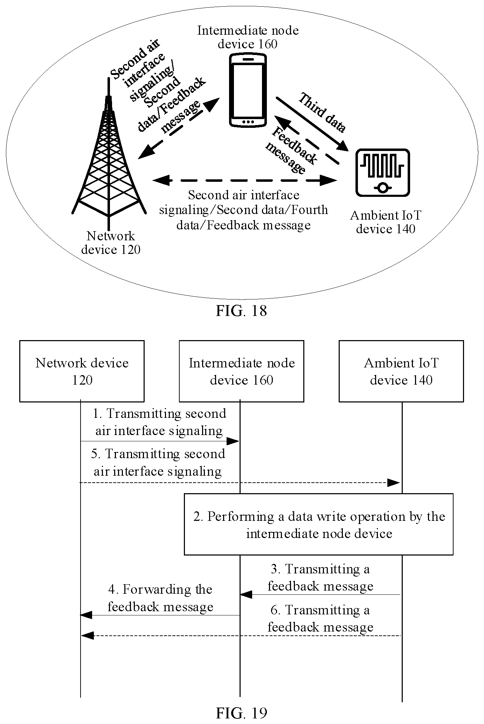

FIG. 18 is a schematic diagram of a communication method for an ambient IoT device according to some embodiments of the present disclosure. FIG. 19 is an interaction diagram of a communication method for an ambient IoT device according to some embodiments of the present disclosure.

A network device initiates a data write operation and coordinates with an intermediate node device, and data is written to an ambient IoT device by the intermediate node device. This process includes step 1, step 2, step 3, and step 4.

In step 1, the network device transmits second air interface signaling to the intermediate node device.

The second air interface signaling is used to instruct a data write operation on the ambient IoT device, and the second air interface signaling is also used to designate the intermediate node device for performing the data write operation on the ambient IoT device.

In step 2, the intermediate node device performs the data write operation on the ambient IoT device, and the ambient IoT device stores second data written by the intermediate node device.

In step 3, the ambient IoT device transmits a feedback message to the intermediate node device.

In step 4, the intermediate node device forwards the feedback message to the network device.

The feedback message is used to indicate a result of the data write operation on the ambient IoT device.

In some embodiments, step 1 in the embodiments may be replaced by step 5. In step 5, the network device transmits the second air interface signaling to the ambient IoT device. The combination of step 3 and step 4 in the embodiments may be replaced by step 6. In step 6, the ambient IoT device transmits the feedback message to the network device.

In some embodiments, the process in which the network device initiates the data write operation and coordinates with the intermediate node device, and the data is written to the ambient IoT device by the intermediate node device, includes step 1, step 2, step 3, and step 4, includes step 5, step 2, step 3, and step 4, includes step 1, step 2, and step 6, or includes step 5, step 2, and step 6.

In some embodiments, the second air interface signaling in the embodiments carries at least one of:
- an identifier of the data write operation;
- data to be written (i.e., the second data);
- a device identifier of the ambient IoT device;
- a temporary key that authorizes the data write operation on the ambient IoT device;
- a signal structure and/or signal content for performing the data write operation on the ambient IoT device;
- an identifier for performing the data write operation on the ambient IoT device;
- an identifier of the intermediate node device; or
- an identifier of the network device.

In the embodiments, the network device initiates the data write operation, and the network device coordinates with the intermediate node device to cause the intermediate node device to write data to the ambient IoT device, thereby realizing the data write operation on the ambient IoT device via the network device.

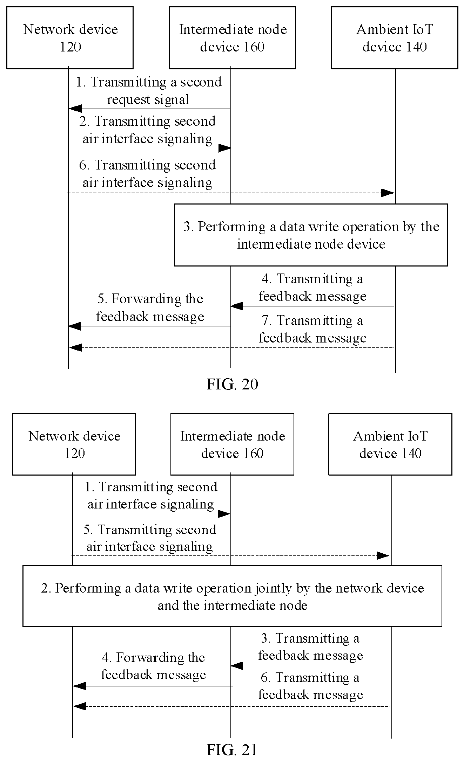

FIG. 20 is an interaction diagram of a communication method for an ambient IoT device according to some embodiments of the present disclosure.

An intermediate node device initiates a data write operation, a network device coordinates with the intermediate node device, and data is written to an ambient IoT device by the intermediate node device. This process includes step 1, step 2, step 3, step 4, and step 5.

In step 1, the intermediate node device transmits a second request signal to the network device.

The second request signal is used to request a data write operation on the ambient IoT device, and the second request signal is also referred to as a data writing request signal.

In step 2, the network device transmits second air interface signaling to the intermediate node device.

The second air interface signaling is used to instruct the data write operation on the ambient IoT device, and the second air interface signaling is also used to designate the intermediate node device for performing the data write operation on the ambient IoT device. The second air interface signaling further carries one or more configuration parameters for the data write operation on the ambient IoT device.

In step 3, the intermediate node device performs the data write operation on the ambient IoT device, and the ambient IoT device stores second data written by the intermediate node device.

In step 4, the ambient IoT device transmits a feedback message to the intermediate node device.

In step 5, the intermediate node device forwards the feedback message to the network device.

The feedback message is used to indicate a result of the data write operation on the ambient IoT device.

In some embodiments, step 2 in the embodiments may be replaced by step 6. In step 6, the network device transmits the second air interface signaling to the ambient IoT device. Alternatively, step 6 is optionally included following step 2, or step 2 may be replaced by the combination of step 2 and step 6.

In some embodiments, the combination of step 4 and step 5 in the embodiments may be replaced by step 7. In step 7, the ambient IoT device transmits the feedback message to the network device. Alternatively, step 7 is optionally included following step 5; step 4 may be replaced by the combination of step 4 and step 7; or step 5 may be replaced by the combination of step 5 and step 7.

In some embodiments, the process in which the intermediate node device initiates the data write operation, the network device coordinates with the intermediate node device, and the data is written to the ambient IoT device by the intermediate node device, includes step 1, step 2, step 3, step 4, and step 5, includes step 1, step 6, step 3, step 4, and step 5, includes step 1, step 2, step 6, step 3, step 4, and step 5, includes step 1, step 2, step 3, and step 7, includes step 1, step 6, step 3, and step 7, or includes step 1, step 2, step 6, step 3, and step 7.

In some embodiments, the second air interface signaling in the embodiments carries at least one of:
- an identifier of the data write operation;
- data to be written (i.e., the second data);
- a device identifier of the ambient IoT device;
- a temporary key that authorizes the data write operation on the ambient IoT device;
- a signal structure and/or signal content for performing the data write operation on the ambient IoT device;
- an identifier for performing the data write operation on the ambient IoT device;
- an identifier of the intermediate node device;
- an identifier of the network device; or
- one or more configuration parameters for the intermediate node device to perform the data write operation on the ambient IoT device.

In the embodiments, the intermediate node device initiates the data write operation, and the network device coordinates with the intermediate node device to cause the intermediate node device to write data to the ambient IoT device, thereby realizing the data write operation on the ambient IoT device by the intermediate node device.

FIG. 21 is an interaction diagram of a communication method for an ambient IoT device according to some embodiments of the present disclosure.

A network device initiates a data write operation, and the network device and an intermediate node device jointly perform the data write operation on an ambient IoT device. This process includes step 1, step 2, step 3, and step 4.

In step 1, the network device transmits second air interface signaling to the intermediate node device.

The second air interface signaling is used to instruct a data write operation on the ambient IoT device, and the second air interface signaling is also used to designate the network device and the intermediate node device for performing the data write operation on the ambient IoT device.

In step 2, the network device and the intermediate node device jointly perform the data write operation on the ambient IoT device, and the ambient IoT device stores third data written by the intermediate node device and fourth data written by the network device.

In step 3, the ambient IoT device transmits a feedback message to the intermediate node device.

In step 4, the intermediate node device forwards the feedback message to the network device.

The feedback message is used to indicate a result of the data write operation on the ambient IoT device.

In some embodiments, step 1 in the embodiments may be replaced by step 5. In step 5, the network device transmits the second air interface signaling to the ambient IoT device. Alternatively, step 5 is optionally included following step 1, or step 1 may be replaced by the combination of step 1 and step 5.

In some embodiments, the combination of step 3 and step 4 in the embodiments may be replaced by step 6. In step 6, the ambient IoT device transmits the feedback message to the network device. Alternatively, step 6 is optionally included following step 4, or step 3 is replaced by the combination of step 3 and step 6, or step 4 is replaced by the combination of step 4 and step 6.

In some embodiments, the process in which the network device initiates the data write operation, and the network device and the intermediate node device jointly perform the data write operation on the ambient IoT device. This process includes step 1, step 2, step 3, and step 4, includes step 5, step 2, step 3, and step 4, includes step 1, step 5, step 2, step 3, and step 4, includes step 1, step 2, and step 6, includes step 5, step 2, and step 6, or includes step 1, step 5, step 2, and step 6.

In some embodiments, the second air interface signaling in the embodiments carries at least one of:
- an identifier of the data write operation;
- data to be written (i.e., the third data and the fourth data);
- a device identifier of the ambient IoT device;
- a temporary key that authorizes the data write operation on the ambient IoT device;
- a signal structure and/or signal content for performing the data write operation on the ambient IoT device;
- an identifier for performing the data write operation on the ambient IoT device;
- an identifier of the intermediate node device; or
- an identifier of the network device.

In the embodiments, the network device initiates the data write operation, and the network device and the intermediate node device jointly write data to the ambient IoT device, thereby realizing the data write operation on the ambient IoT device.

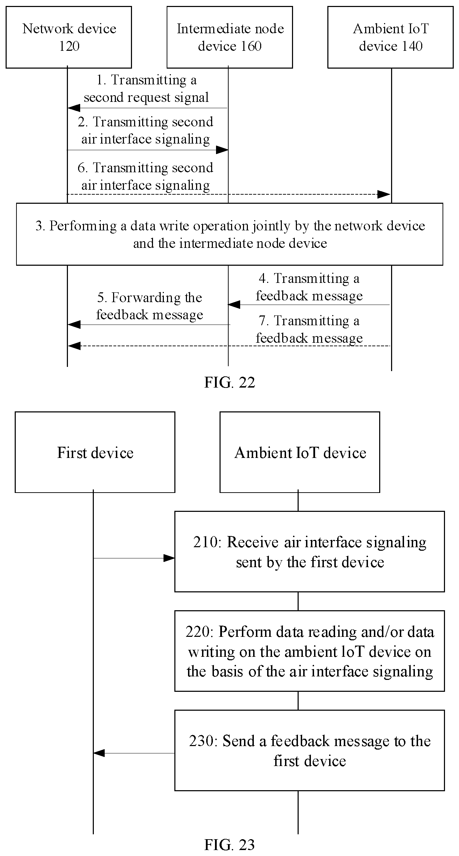

FIG. 22 is an interaction diagram of a communication method for an ambient IoT device according to some embodiments of the present disclosure.

An intermediate node device initiates a data write operation, and a network device and the intermediate node device jointly perform the data write operation on the ambient IoT device. This process includes step 1, step 2, step 3, step 4, and step 5.

In step 1, the intermediate node device transmits a second request signal to the network device.

The second request signal is used to request a data write operation on the ambient IoT device.

In step 2, the network device transmits second air interface signaling to the intermediate node device.

The second air interface signaling is used to instruct the data write operation on the ambient IoT device, and the second air interface signaling is also used to designate the network device and the intermediate node device for performing the data write operation on the ambient IoT device. The second air interface signaling further carries one or more configuration parameters for the data write operation on the ambient IoT device.

In step 3, the network device and the intermediate node device jointly perform the data write operation on the ambient IoT device, and the ambient IoT device stores third data written by the intermediate node device and fourth data written by the network device.

In step 4, the ambient IoT device transmits a feedback message to the intermediate node device.

In step 5, the intermediate node device forwards the feedback message to the network device.

The feedback message is used to indicate a result of the data write operation on the ambient IoT device.

In some embodiments, step 2 in the embodiments may be replaced by step 6. In step 6, the network device transmits the second air interface signaling to the ambient IoT device. Alternatively, step 6 is optionally included following step 2, or step 2 may be replaced by the combination of step 2 and step 6.

In some embodiments, the combination of step 4 and step 5 in the embodiments may be replaced by step 7. In step 7, the ambient IoT device transmits the feedback message to the network device. Alternatively, step 7 is further included following step 5; step 4 is replaced by the combination of step 4 and step 7; or step 5 is replaced by the combination of step 5 and step 7.

In some embodiments, the process in which the intermediate node device initiates the data write operation, and the network device and the intermediate node device jointly perform the data write operation on the ambient IoT device, includes step 1, step 2, step 3, step 4, and step 5, includes step 1, step 6, step 3, step 4, and step 5, includes step 1, step 2, step 6, step 3, step 4, and step 5, includes step 1, step 2, step 3, and step 7, includes step 1, step 6, step 3, and step 7, or includes step 1, step 2, step 6, step 3, and step 7.

In some embodiments, the second air interface signaling in the embodiments carries at least one of:
- an identifier of the data write operation;
- data to be written (i.e., the third data and the fourth data);
- a device identifier of the ambient IoT device;
- a temporary key that authorizes the data write operation on the ambient IoT device;
- a signal structure and/or signal content for performing the data write operation on the ambient IoT device;
- an identifier for performing the data write operation on the ambient IoT device;
- an identifier of the intermediate node device;
- an identifier of the network device; or
- one or more configuration parameters for the intermediate node device to perform the data write operation on the ambient IoT device.

In the embodiments, the intermediate node device initiates the data write operation, and the network device and the intermediate node device jointly write data to the ambient IoT device, thereby realizing the data write operation on the ambient IoT device.

Descriptions are provided hereinafter with respect to other designs in the process of data reading and data writing.

### • Illustrative Examples

In applications such as warehousing, logistics, and smart homes, data may be written to an ambient IoT device by an intermediate node device (e.g., a handheld device); or semi-static configuration parameters for a period of time may be written to an ambient IoT device by an intermediate node device, and then data during communication may be written to the ambient IoT device by a network device; or a device identifier may be written to an ambient IoT device by an intermediate node device during deployment. Upon completion of deployment, the network device performs a data read operation during communication.

### • Optional Designs

- A data write operation on an ambient IoT device may be optionally applicable to one or more of the following application scenarios:
   (a) an intermediate node device writes data to the ambient IoT device without coordination from a network device;
   (b) an intermediate node device and/or a network device initiates a data write operation, and the network device coordinates with the intermediate node device to cause the intermediate node device to write data to the ambient IoT device;
   (c) an intermediate node device and a network device jointly write data to the ambient IoT device, wherein, in some embodiments, types of data to be written respectively corresponding to the intermediate node device and the network device are different, and may be distinguished according to SRAM and NVRAM; and
   (d) a network device writes data to the ambient IoT device, and an intermediate node device supplies required energy, wherein a high-power RF signal required for data writing is provided by the intermediate node device under the control of the network device.
- A data write operation on the ambient IoT device may optionally be:
   (a) completed by two devices, wherein the two devices include:
      - a network device and the ambient IoT device; or
      - a dedicated device and the ambient IoT device.
   (b) completed by three devices, wherein the three devices include:
      - a network device, an intermediate node device, and the ambient IoT device, wherein
      - in application scenario (a), the network device initiates a data write operation, while the data write operation is actually performed by the intermediate node device due to RF power limitations;
      - in application scenario (b), the intermediate node device initiates a data write operation, and is required to transmit a request signal to the network device due to lack of authorization, and subsequently performs the data write operation under the coordination of the network device. In some embodiments, the network device may or may not transmit air interface signaling to the ambient IoT device for indication purposes; or
      - in application scenario (c), the data write operation is performed by the network device, requiring cooperation from the intermediate node device. The intermediate node device serves to provide a high-power RF signal. In some embodiments, the intermediate node device may also handle forwarding of part or all of air interface signaling/data.

### • Band Designs

In some embodiments, the data read operation and the data write operation operate within the same band.

In some embodiments, the data write operation and the data read operation operate within different bands.

In some embodiments, the data write operation operates in a dedicated band for data writing.

In some embodiments, at least one of the band designs in the embodiments may be combined with the embodiments of data reading and data writing as described above.

### • Operating Modes

In some embodiments, the ambient IoT device operates in at least one of:
- a first data reading mode where the data read operation is performed by the network device;
- a second data reading mode where the data read operation is performed by the intermediate node device;
- a first data writing mode where the data write operation is performed by the network device; or
- a second data writing mode where he data write operation is performed by the intermediate node device.

In some embodiments, at least one of the operating modes in the embodiments may be combined with the embodiments of data reading and data writing as described above.

### • Capability Reporting

In some embodiments, the ambient IoT device further reports capability information to the network device. The capability information is used to indicate whether the ambient IoT device supports the data read operation and/or the data write operation. The network device performs the data read operation and/or the data write operation on the ambient IoT device based on the capability information of the ambient IoT device.

In some embodiments, the capability reporting operation may be combined with the embodiments of data reading and data writing as described above.

### • Illustrative Examples

- In example 1, a network device performs a data read operation and/or a data write operation.
   (a) Upon initial network access, an ambient IoT device reports capability information on support for reading/writing to the network device. For example, band 1 for data reading supports optional channels within 925 MHz and/or 2.4 GHz bands, and band 2 for data writing supports optional channels within an 845 MHz band.
   (b) Upon receiving the capability report from the ambient IoT device, the network device triggers control signaling to perform the data read operation and/or the data write operation on the ambient IoT device based on the bands or band combinations for reading/writing in (a);
   (c) Upon completion of the data read operation and/or the data write operation, the ambient IoT device provides feedback on an available channel within the band used in (b) for the completion of the data read operation and/or the data write operation, such as feedback to the network device via time-division multiplexing (TDM).
- In example 2, a network device initiates a data read operation, and a mobile phone (i.e., an intermediate node device) initiates a data write operation.
   (a) Upon initial network access, an ambient IoT device reports capability information on support for reading/writing to the network device. For example, band 1 for data reading supports optional channels within 925 MHz and/or 2.4 GHz bands, and band 2 for data writing supports optional channels within an 845 MHz band.
   (b) Upon receiving the capability report from the ambient IoT device, the network device transmits control signaling to perform the data read operation on the ambient IoT device based on the band for data reading in (a).
   (c) Alternatively, the network device initiates control over the mobile phone, and instructs the mobile phone to transmit control signaling to the ambient IoT device based on the band for data writing in (a) to perform the data write operation on the ambient IoT device.
   (d) Upon completion of the data read operation in (b), the ambient IoT device feeds back required data to the network device via TDM on an available channel within the same band as used in (b). In this case, bands for receiving and transmitting of the ambient IoT device are identical. Alternatively, the required data is fed back to the mobile phone within the band for data writing in (c), and the mobile phone forwards the data to the network device. In this case, the bands for receiving and transmitting of the ambient IoT device are different.
   (e) Alternatively, upon completion of the data write operation in (c), the ambient IoT device provides feedback to the mobile phone via TDM on an available channel within the same band as used in (c), and the mobile phone forwards the feedback to the network device. In this case, the bands for receiving and transmitting of the ambient IoT device are identical, requiring methods such as transmit-receive isolation or time-division to avoid self-interference.
- In example 3, a network device initiates a data read operation.
   (a) Upon initial network access, an ambient IoT device reports capability information on support for reading/writing to the network device. For example, the ambient IoT device supports a data read operation and does not support a data write operation.
   (b) Upon receiving the capability report from the ambient IoT device, the network device transmits control signaling to perform the data read operation on the ambient IoT device based on the band for data reading in (a).
   (c) Upon completion of the data read operation in (b), the ambient IoT device feeds back required data to the network device via TDM on an available channel within the same band as used in (b). In this case, bands for receiving and transmitting of the ambient IoT device are identical.
- In example 4, a network device initiates a data read operation, and a mobile phone (i.e., an intermediate node device) initiates a data write operation.
   (a) Upon initial network access, an ambient IoT device reports capability information on support for reading/writing to the network device. For example, the ambient IoT device supports long-range data reading and short-range data writing.
   (b) Upon receiving the capability report from the ambient IoT device, the network device triggers a surrounding mobile phone to initiate the data write operation and informs this mobile phone of data writing requirements. For example, the network device performs downlink power control on the mobile phone to increase transmission power, and specifies a dedicated band for data writing, and a preamble, different sequence prefixes, or different field values for data writing signaling.
   (c) The mobile phone transmits the data writing signaling to the ambient IoT device based on the requirements in (b).
   (d) Upon completion of the data write operation in (c), the ambient IoT device provides feedback to the mobile phone via TDM on an available channel within the same band as used in (c), and the mobile phone forwards the feedback to the network device. Alternatively, the ambient IoT device directly feeds back an indication of successful data writing to the network device within a band for data reading, and the network device notifies or controls the mobile phone regarding whether to continue the data write operation.

### • Communication Methods

In some embodiments, the ambient IoT device transmits data using an active transmission and/or backscatter communication method in the data transmission steps related to the ambient IoT device involved in the above embodiments.

In some embodiments, the communication method in the embodiments may be combined with the embodiments of data reading and data writing as described above.

### • Energy Acquisition

In some embodiments, energy used by the ambient IoT device for communication in the above embodiments is acquired by at least one of:
- RF power harvesting based on air interface signaling from the network device;
- energy harvesting based on RF signals transmitted in advance by the network device;
- energy harvesting based on RF signals from a dedicated energy supply device, a third-party energy supply device, a handheld device (i.e., the intermediate node device), or the like;
- energy harvesting based on environmental energy other than RF energy; or
- a battery carried by the ambient IoT device.

In some embodiments, at least one of the energy acquisition methods may be combined with the embodiments of data reading and data writing as described above.

The following embodiments respectively describe steps of a communication method for an ambient IoT device performed by different entities.

FIG. 23 is a flowchart of a communication method for an ambient IoT device according to some embodiments of the present disclosure. The method is performed by the ambient IoT device and includes all or part of step 210, step 220, and step 230.

**In step 210,** the ambient IoT device receives air interface signaling from a first device.

**In step 220,** the ambient IoT device performs a data read operation and/or a data write operation on the ambient IoT device based on the air interface signaling.

**In step 230,** the ambient IoT device transmits a feedback message to the first device.

In some embodiments, the first device is configured to transmit the air interface signaling.

In some embodiments, the first device is configured to forward the air interface signaling.

In some embodiments, the first device includes at least one of:
- a dedicated device;
- a network device; or
- an intermediate node device.

In some embodiments, the dedicated device is dedicated to performing the data write operation on the ambient IoT device.

In some embodiments, the dedicated device includes at least one of: a terminal device, a smart phone, a CPE, a base station device, or a network device.

In some embodiments, the intermediate node device is configured to assist the network device in performing the data read operation and/or the data write operation.

In some embodiments, the intermediate node device includes at least one of: a terminal device, a smart phone, a CPE, a base station device, or a handheld device.

In some embodiments, the air interface signaling is used to instruct the data read operation and/or the data write operation on the ambient IoT device.

In some embodiments, the air interface signaling is used to control the data read operation and/or the data write operation on the ambient IoT device.

In some embodiments, the air interface signaling is used to instruct the data read operation and/or the data write operation on the ambient IoT device.

In some embodiments, the air interface signaling carries at least one of:
- an identifier of the data read operation;
- a device identifier of the ambient IoT device;
- a temporary key that authorizes the data read operation on the ambient IoT device;
- a signal structure and/or signal content for performing the data read operation on the ambient IoT device;
- an identifier for performing the data read operation on the ambient IoT device; or
- an identifier of the intermediate node device.

In some embodiments, the identifier of the data read operation may be indicated by a field or a sequence. The sequence carries the identifier dedicated to indicating the data read operation.

In some embodiments, the signal structure and/or the signal content for performing the data read operation on the ambient IoT device may include at least one of a preamble or prefix information.

In some embodiments, the identifier of the intermediate node device includes an identity document (ID).

In some embodiments, the air interface signaling used to instruct the data read operation on the ambient IoT device is also referred to as first air interface signaling.

In some embodiments, in step 210, the ambient IoT device receives the first air interface signaling from the network device; and in step 220, the ambient IoT device transmits first data to the network device based on the first air interface signaling. The first air interface signaling is used to instruct the data read operation on the ambient IoT device. The first air interface signaling is generated by the network device.

In some embodiments, in step 210, the ambient IoT device receives the first air interface signaling forwarded by the intermediate node device; and in step 220, the ambient IoT device transmits first data to the network device based on the first air interface signaling. The first air interface signaling is used to instruct the data read operation on the ambient IoT device. The first air interface signaling is generated by the network device.

In some embodiments, in step 210, the ambient IoT device receives the first air interface signaling forwarded by the intermediate node device; and in step 220, the ambient IoT device transmits first data to the intermediate node device based on the first air interface signaling. The first air interface signaling is used to instruct the data read operation on the ambient IoT device. The first air interface signaling is generated by the network device. The intermediate node device is further configured to forward the first data to the network device, enabling the network device to acquire the first data of the ambient IoT device.

In some embodiments, in step 210, the ambient IoT device receives data read signaling from the intermediate node device; and in step 220, the ambient IoT device transmits first data to the network device based on the data read signaling. The data read signaling is used to instruct the data read operation on the ambient IoT device. The data read signaling is generated by the intermediate node device based on the first air interface signaling, and the first air interface signaling is generated by the network device.

In some embodiments, the data read signaling is control signaling used to instruct the data read operation on the ambient IoT device.

In some embodiments, the data read signaling is generated by the intermediate node device based on the received first air interface signaling. The first air interface signaling is generated by the network device and transmitted by the network device to the intermediate node device.

In some embodiments, information carried by the data read signaling may be the same as, partially the same as, or completely different from information carried by the first air interface signaling.

In some embodiments, the data read signaling carries at least one of:
- an identifier of the data read operation;
- a device identifier of the ambient IoT device;
- a temporary key that authorizes the data read operation on the ambient IoT device;
- a signal structure and/or signal content for performing the data read operation on the ambient IoT device;
- an identifier for performing the data read operation on the ambient IoT device; or
- an identifier of the intermediate node device.

In some embodiments, the ambient IoT device transmits data via active transmission and/or backscatter communication.

In some embodiments, energy used by the ambient IoT device for communication is acquired by at least one of:
- RF power harvesting based on air interface signaling from the network device;
- energy harvesting based on RF signals transmitted in advance by the network device;
- energy harvesting based on RF signals from a dedicated energy supply device, a third-party energy supply device, a handheld device (i.e., the intermediate node device), or the like;
- energy harvesting based on environmental energy other than RF energy; or
- a battery carried by the ambient IoT device.

In some embodiments, the air interface signaling carries at least one of:
- an identifier of the data write operation;
- data to be written;
- a device identifier of the ambient IoT device;
- a temporary key that authorizes the data write operation on the ambient IoT device;
- a signal structure and/or signal content for performing the data write operation on the ambient IoT device;
- an identifier for performing the data write operation on the ambient IoT device;
- an identifier of the intermediate node device; or
- an identifier of the network device.

In some embodiments, the identifier of the data write operation may be indicated by a field or a sequence. The sequence carries the identifier dedicated to indicating the data write operation.

In some embodiments, the signal structure and/or the signal content for performing the data write operation on the ambient IoT device may include at least one of a preamble or prefix information.

In some embodiments, the identifier of the intermediate node device includes an ID.

In some embodiments, the identifier of the network device includes an ID of the network device.

In some embodiments, the air interface signaling used to instruct the data write operation on the ambient IoT device is also referred to as second air interface signaling. The second air interface signaling is further used to indicate that the data write operation on the ambient IoT device is performed by the intermediate node device.

In some embodiments, the dedicated device performs the data write operation on the ambient IoT device.

In some embodiments, in step 210, the ambient IoT device receives the second air interface signaling from the dedicated device; and in step 220, the ambient IoT device stores second data written to the ambient IoT device by the dedicated node device. The second air interface signaling is used to designate the dedicated device for performing the data write operation on the ambient IoT device.

In some embodiments, the network device coordinates with the intermediate node device and triggers the intermediate node device to perform the data write operation on the ambient IoT device by transmitting the second air interface signaling to the intermediate node device.

In some embodiments, in step 210, the ambient IoT device receives the second air interface signaling from the network device; and in step 220, the ambient IoT device stores second data written to the ambient IoT device by the intermediate node device. The second air interface signaling is used to designate the intermediate node device for performing the data write operation on the ambient IoT device. The network device is configured to initiate the data write operation, or the intermediate node device is configured to initiate the data write operation.

In some embodiments, although the network device is configured to initiate the data write operation, data is actually written to the ambient IoT device by the intermediate node device due to RF power limitations.

In some embodiments, the air interface signaling used to instruct the data write operation on the ambient IoT device is also referred to as the second air interface signaling. The second air interface signaling is further used to indicate that the data write operation on the ambient IoT device is performed jointly by the network device and the intermediate node device.

In some embodiments, the network device triggers the joint execution of the data write operation on the ambient IoT device with the intermediate node device by transmitting the second air interface signaling to the intermediate node device.

In some embodiments, in step 210, the ambient IoT device receives the second air interface signaling from the network device; and in step 220, the ambient IoT device stores third data written to the ambient IoT device by the intermediate node device and fourth data written to the ambient IoT device by the network device. The second air interface signaling is used to designate the network device and the intermediate node device for performing the data write operation on the ambient IoT device.

In some embodiments, the ambient IoT device stores the data to be written in a memory.

In some embodiments, the ambient IoT device includes at least one of:
- a fixed storage area;
- an SRAM; or
- an NVRAM.

In some embodiments, in a case where the ambient IoT device only includes the fixed storage area, data is written in factory and cannot be changed afterward. For example, a device ID of the ambient IoT device is written during manufacturing.

In some embodiments, in a case where the ambient IoT device only includes the NVRAM, the ambient IoT device may support information storage during a power-off event.

In some embodiments, the dedicated device/intermediate node device and/or the network device writes data to the NVRAM of the ambient IoT device.

In some embodiments, the dedicated device/intermediate node device and/or the network device writes data to the SRAM of the ambient IoT device.

In some embodiments, in step 230, the ambient IoT device transmits the feedback message to the network device. The feedback message is used to indicate a result of the data read operation and/or the data write operation on the ambient IoT device.

In some embodiments, in step 230, the ambient IoT device transmits the feedback message to the intermediate node device. The feedback message is used to indicate a result of the data read operation and/or the data write operation on the ambient IoT device. The intermediate node device is further configured to forward the feedback message to the network device.

In some embodiments, the feedback message is used to indicate completion of the data read operation and/or the data write operation on the ambient IoT device.

In some embodiments, the feedback message is used to indicate success of the data read operation and/or the data write operation on the ambient IoT device.

In some embodiments, the feedback message includes a first value. The first value is used to indicate the result/completion/success of the data read operation and/or the data write operation on the ambient IoT device. The first value may be 1.

In some embodiments, the feedback message includes a second value. The second value is used to indicate the result/incompletion/failure of the data read operation and/or the data write operation on the ambient IoT device. The second value may be 0.

In some embodiments, the data read operation and the data write operation operate in the same band.

In some embodiments, the data write operation and the data read operation operate in different bands.

In some embodiments, the data write operation operates in a dedicated band for data writing.

In some embodiments, the ambient IoT device operates in at least one of:
- a first data reading mode where the data read operation is performed by the network device;
- a second data reading mode where the data read operation is performed by the intermediate node device;
- a first data writing mode where the data write operation is performed by the network device; or
- a second data writing mode where the data write operation is performed by the intermediate node device.

In some embodiments, the first data reading mode is also referred to as a network device data reading mode.

In some embodiments, the second data reading mode is also referred to as an intermediate node device data reading mode.

In some embodiments, the first data writing mode is also referred to as a network device data writing mode.

In some embodiments, the second data writing mode is also referred to as an intermediate node device data writing mode.

In some embodiments, step 200 is further included prior to step 210. In step 200, the ambient IoT device reports capability information to the network device. The capability information is used to indicate whether the ambient IoT device supports the data read operation and/or the data write operation.

In some embodiments, the network device performs the data read operation and/or the data write operation on the ambient IoT device based on the capability information reported by the ambient IoT device.

In the embodiments, the ambient IoT device may complete the data read operation and/or the data write operation based on the air interface signaling from the network device and/or forwarded by the intermediate node device. This allows for performing the data read operation separately, the data write operation separately, or the data read operation and the data write operation simultaneously on the ambient IoT device, thereby expanding application scenarios.

It should be understood that step 210 may be implemented independently as a data receiving method performed by the ambient IoT device, in which case step 220 and step 230 are optional. Step 220 may be implemented independently as a data processing method performed by the ambient IoT device, in which case step 210 and step 230 are optional. Step 230 may be implemented independently as a data feedback method performed by the ambient IoT device, in which case step 220 and step 210 are optional. Step 210 and step 220 may be combined and implemented as a data processing method performed by the ambient IoT device, in which case step 230 is optional. Step 220 and step 230 may be combined and implemented as a data processing and feedback method performed by the ambient IoT device. In this case, step 210 is optional.

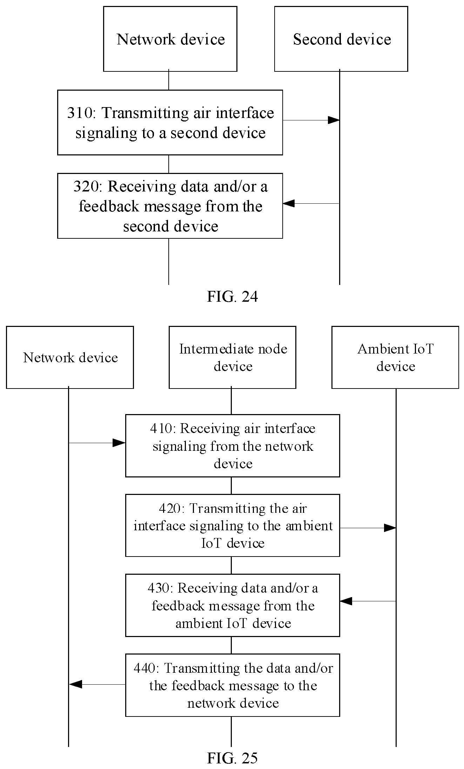

FIG. 24 is a flowchart of a communication method for an ambient IoT device according to an exemplary embodiment of the present disclosure. The method is performed by a network device and includes all or part of step 310 and step 320.

**In step 310,** the network device transmits air interface signaling to a second device.

**In step 320,** the network device receives data and/or a feedback message from the second device.

In some embodiments, the second device is configured to receive the air interface signaling.

In some embodiments, the second device is configured to perform a data read operation and/or a data write operation based on the air interface signaling.

In some embodiments, the second device includes at least one of:
- an ambient IoT device; or
- an intermediate node device.

In some embodiments, the intermediate node device is configured to assist the network device in performing a data read operation and/or a data write operation on the ambient IoT device.

In some embodiments, the intermediate node device includes at least one of: a terminal device, a smart phone, a CPE, a base station device, or a handheld device.

In some embodiments, the air interface signaling is used to instruct a data read operation and/or a data write operation on the ambient IoT device.

In some embodiments, the air interface signaling is used to control a data read operation and/or a data write operation on the ambient IoT device.

In some embodiments, the air interface signaling is used to instruct the data read operation or the data write operation on the ambient IoT device.

In some embodiments, the air interface signaling carries at least one of:
- an identifier of the data read operation;
- a device identifier of the ambient IoT device;
- a temporary key that authorizes the data read operation on the ambient IoT device;
- a signal structure and/or signal content for performing the data read operation on the ambient IoT device; or
- an identifier for performing the data read operation on the ambient IoT device; or
- an identifier of the intermediate node device.

In some embodiments, the identifier of the data read operation may be indicated by a field or a sequence. The sequence carries the identifier dedicated to indicating the data read operation.

In some embodiments, the signal structure and/or the signal content for performing the data read operation on the ambient IoT device may include at least one of a preamble or prefix information.

In some embodiments, the identifier of the intermediate node device includes an ID.

In some embodiments, the air interface signaling used to instruct the data read operation on the ambient IoT device is also referred to as first air interface signaling.

In some embodiments, in step 310, the network device transmits the first air interface signaling to the ambient IoT device; and in step 320, the network device receives first data from the ambient IoT device. The first air interface signaling is used to instruct the data read operation on the ambient IoT device. The first air interface signaling is generated by the network device.

In some embodiments, in step 310, the network device transmits the first air interface signaling to the intermediate node device; and in step 320, the network device receives first data from the ambient IoT device. The first air interface signaling is used to instruct the data read operation on the ambient IoT device. The intermediate node device is further configured to forward the first air interface signaling to the ambient IoT device. The first air interface signaling is generated by the network device.

In some embodiments, in step 310, the network device transmits the first air interface signaling to the intermediate node device; and in step 320, the network device receives first data of the ambient IoT device forwarded by the intermediate node device. The first air interface signaling is used to instruct the data read operation on the ambient IoT device. The intermediate node device is further configured to forward the first air interface signaling to the ambient IoT device. The intermediate node device is further configured to forward the first data to the network device.

In some embodiments, step 300 is further included prior to step 310. In step 300, the network device receives a first request signal from the intermediate node device, wherein the first request signal is used to request the data read operation on the ambient IoT device. In step 310, the network device transmits the first air interface signaling to the intermediate node device based on the first request signal, wherein the first air interface signaling is used to instruct the data read operation on the ambient IoT device. The first air interface signaling further carries one or more configuration parameters for performing the data read operation on the ambient IoT device.

In some embodiments, the air interface signaling carries at least one of:
- an identifier of the data write operation;
- data to be written;
- a device identifier of the ambient IoT device;
- a temporary key that authorizes the data write operation on the ambient IoT device;
- a signal structure and/or signal content for performing the data write operation on the ambient IoT device;
- an identifier for performing the data write operation on the ambient IoT device;
- an identifier of the intermediate node device; or
- an identifier of the network device.

In some embodiments, the identifier of data write operation may be indicated by a field or a sequence. The sequence carries the identifier dedicated to indicating the data write operation.

In some embodiments, the signal structure and/or the signal content for performing the data write operation on the ambient IoT device may include at least one of a preamble and prefix information.

In some embodiments, the identifier of the intermediate node device includes an ID.

In some embodiments, the identifier of the network device includes an ID of the network device.

In some embodiments, the air interface signaling used to instruct the data write operation on the ambient IoT device is also referred to as second air interface signaling. The second air interface signaling is further used to indicate that the data write operation on the ambient IoT device is performed by the intermediate node device.

In some embodiments, in step 310, the network device transmits the second air interface signaling to the intermediate node device; and in step 320, the network device receives a feedback message from the ambient IoT device or forwarded by the intermediate node device. The second air interface signaling is used to instruct the data write operation on the ambient IoT device.

In some embodiments, the network device initiates the data write operation and coordinates with the intermediate node device to cause the intermediate node device to perform the data write operation on the ambient IoT device.

In some embodiments, step 300 is further included prior to step 310. In step 300, the network device receives a second request signal from the intermediate node device, wherein the second request signal is used to request the data write operation on the ambient IoT device; and in step 320, the network device transmits the second air interface signaling to the intermediate node device based on the second request signal. The second air interface signaling is used to instruct the data write operation on the ambient IoT device. The second air interface signaling further carries one or more configuration parameters for the data write operation on the ambient IoT device.

In some embodiments, the intermediate node device initiates the data write operation, and the network device coordinates with the intermediate node device to cause the intermediate node device to perform the data write operation on the ambient IoT device.

In some embodiments, the air interface signaling used to instruct the data write operation on the ambient IoT device is also referred to as the second air interface signaling. The second air interface signaling is further used to indicate that the data write operation on the ambient IoT device is performed jointly by the network device and the intermediate node device.

In some embodiments, the intermediate node device initiates the data write operation, or alternatively, the network device initiates the data write operation. The network device coordinates with the intermediate node device, and jointly performs the data write operation on the ambient IoT device with the intermediate node device.

In some embodiments, in step 310, the network device transmits the second air interface signaling to the ambient IoT device; and in step 320, the network device receives a feedback message from the ambient IoT device or forwarded by the intermediate node device. The second air interface signaling is used to designate the network device and the intermediate node device for performing the data write operation on the ambient IoT device.

In some embodiments, the dedicated device/intermediate node device and/or the network device writes data to an NVRAM of the ambient IoT device.

In some embodiments, the dedicated device/intermediate node device and/or the network device writes data to an SRAM of the ambient IoT device.

In some embodiments, the network device writes fourth data to the ambient IoT device based on the second air interface signaling.

In some embodiments, the feedback message is used to indicate completion of the data read operation and/or the data write operation on the ambient IoT device.

In some embodiments, the feedback message is used to indicate success of the data read operation and/or the data write operation on the ambient IoT device.

In some embodiments, the feedback message includes a first value. The first value is used to indicate the result/completion/success of the data read operation and/or the data write operation on the ambient IoT device. The first value may be 1.

In some embodiments, the feedback message includes a second value. The second value is used to indicate the result/incompletion/failure of the data read operation and/or the data write operation on the ambient IoT device. The second value may be 0.

In some embodiments, step 300 is further included prior to step 310. In step 310, the network device receives capability information from the ambient IoT device, wherein the capability information is used to indicate whether the ambient IoT device supports the data read operation and/or the data write operation.

In some embodiments, the network device performs the data read operation and/or the data write operation on the ambient IoT device based on the capability information reported by the ambient IoT device.

In the embodiments, the network device may perform the data read operation and/or the data write operation on the ambient IoT device in combination with the intermediate node device. This allows for performing the data read operation separately, the data write operation separately, or the data read operation and the data write operation simultaneously on the ambient IoT device, thereby expanding application scenarios.

It should be understood that step 310 may be implemented independently as a data transmitting method performed by the network device, in which case step 320 is optional. Step 320 may be implemented independently as a data receiving method performed by the network device, in which case step 310 is optional.

FIG. 25 is a flowchart of a communication method for an ambient IoT device according to some embodiments of the present disclosure. The method is performed by an intermediate node device and includes all or part of step 410, step 420, step 430, and step 440.

**In step 410,** the intermediate node device receives air interface signaling from a network device.

**In step 420,** the intermediate node device transmits the air interface signaling to an ambient IoT device.

**In step 430,** the intermediate node device receives data and/or a feedback message from the ambient IoT device.

**In step 440,** the intermediate node device transmits the data and/or the feedback message to the network device.

In some embodiments, the intermediate node device is configured to assist the network device in performing a data read operation and/or a data write operation.

In some embodiments, the intermediate node device includes at least one of: a terminal device, a smart phone, a CPE, a base station device, or a handheld device.

In some embodiments, the air interface signaling is used to instruct a data read operation and/or a data write operation on the ambient IoT device.

In some embodiments, the air interface signaling is used to control a data read operation and/or a data write operation on the ambient IoT device.

In some embodiments, the air interface signaling is used to instruct a data read operation and/or a data write operation on the ambient IoT device.

In some embodiments, the air interface signaling carries at least one of:
- an identifier of a data read operation;
- a device identifier of the ambient IoT device;
- a temporary key that authorizes a data read operation on the ambient IoT device;
- a signal structure and/or signal content for performing a data read operation on the ambient IoT device;
- an identifier for performing a data read operation on the ambient IoT device; or
- an identifier of the intermediate node device.

In some embodiments, the identifier of the data read operation may be indicated by a field or a sequence. The sequence carries the identifier dedicated to indicating the data read operation.

In some embodiments, the signal structure and/or the signal content for performing the data read operation on the ambient IoT device may include at least one of a preamble or prefix information.

In some embodiments, the identifier of the intermediate node device includes an ID.

In some embodiments, the air interface signaling used to instruct the data read operation on the ambient IoT device is also referred to as first air interface signaling.

In some embodiments, the network device initiates the data read operation. In step 410, the intermediate node device receives the first air interface signaling from the network device; and in step 420, the intermediate node device transmits the first air interface signaling to the ambient IoT device. The first air interface signaling is used to instruct the data read operation on the ambient IoT device, and the first air interface signaling is generated by the network device.

In some embodiments, the intermediate node device initiates the data read operation. Step 400 is further included prior to step 410. In step 400, the intermediate node device transmits a first request signal to the network device, wherein the first request signal is used to request the data read operation on the ambient IoT device. In step 410, the intermediate node device receives the first air interface signaling from the network device, wherein the first air interface signaling is used to instruct the data read operation on the ambient IoT device.

In some embodiments, upon receiving the first air interface signaling from the network device in step 410, step 412 may be further included. In step 412, the intermediate node device generates data read signaling based on the first air interface signaling, wherein the data read signaling is used to instruct the data read operation on the ambient IoT device. Accordingly, in step 420, the intermediate node device transmits the data read signaling to the ambient IoT device.

In some embodiments, the data read signaling is control signaling used to instruct the data read operation on the ambient IoT device.

In some embodiments, the data read signaling is generated by the intermediate node device based on the received first air interface signaling, and the first air interface signaling is generated by the network device and transmitted by the network device to the intermediate node device.

In some embodiments, information carried by the data read signaling may be the same as, partially the same as, or completely different from information carried by the first air interface signaling.

In some embodiments, the data read signaling carries at least one of:
- an identifier of the data read operation;
- a device identifier of the ambient IoT device;
- a temporary key that authorizes the data read operation on the ambient IoT device;
- a signal structure and/or signal content for performing the data read operation on the ambient IoT device;
- an identifier for performing the data read operation on the ambient IoT device; or
- an identifier of the intermediate node device.

In some embodiments, in performing the data read operation on the ambient IoT device, in step 430, the intermediate node device receives first data from the ambient IoT device; and in step 440, the intermediate node device transmits the first data to the network device.

In some embodiments, the air interface signaling carries at least one of:
- an identifier of a data write operation;
- data to be written;
- a device identifier of the ambient IoT device;
- a temporary key that authorizes a data write operation on the ambient IoT device;
- a signal structure and/or signal content for performing a data write operation on the ambient IoT device;
- an identifier for performing a data write operation on the ambient IoT device;
- an identifier of the intermediate node device; or
- an identifier of the network device.

In some embodiments, the identifier of the data write operation may be indicated by a field or a sequence. The sequence carries the identifier dedicated to indicating the data write operation.

In some embodiments, the signal structure and/or the signal content for performing the data write operation on the ambient IoT device may include at least one of a preamble or prefix information.

In some embodiments, the identifier of the intermediate node device includes an ID.

In some embodiments, the identifier of the network device includes an ID of the network device.

In some embodiments, the air interface signaling used to instruct the data write operation on the ambient IoT device is also referred to as second air interface signaling. The second air interface signaling is further used to indicate that the data write operation on the ambient IoT device is performed by the intermediate node device.

In some embodiments, the intermediate node device initiates the data write operation, and the network device coordinates with the intermediate node device to cause the intermediate node device to perform the data write operation on the ambient IoT device. Step 400 is further included prior to step 410. In step 400, the ambient IoT device transmits a second request signal to the network device, wherein the second request signal is used to request the data write operation on the ambient IoT device. In step 410, the intermediate node device receives the second air interface signaling from the network device, wherein the second air interface signaling is used to designate the intermediate node device for performing the data write operation on the ambient IoT device. In step 420, the intermediate node device transmits the second air interface signaling to the ambient IoT device. The intermediate node device is configured to initiate the data write operation.

In some embodiments, the network device initiates the data write operation and coordinates with the intermediate node device to cause the intermediate node device to perform the data write operation on the ambient IoT device. In step 410, the intermediate node device receives the second air interface signaling from the network device, wherein the second air interface signaling is used to designate the intermediate node device for performing the data write operation on the ambient IoT device. In step 420, the intermediate node device transmits the second air interface signaling to the ambient IoT device. The network device is configured to initiate the data write operation.

In some embodiments, step 422 is further included following step 420. In step 422, the intermediate node device writes second data to the ambient IoT device based on the second air interface signaling.

In some embodiments, the air interface signaling used to instruct the data write operation on the ambient IoT device is also referred to as the second air interface signaling. The second air interface signaling is further used to indicate that the data write operation on the ambient IoT device is performed jointly by the network device and the intermediate node device.

In some embodiments, the intermediate node device and/or the network device initiates the data write operation, and the network device and the intermediate node device jointly perform the data write operation on the ambient IoT device. In step 410, the intermediate node device receives the second air interface signaling from the network device, wherein the second air interface signaling is used to designate the network device and the intermediate node device for performing the data write operation on the ambient IoT device. In step 420, the intermediate node device transmits the second air interface signaling to the ambient IoT device.

In some embodiments, step 424 is further included following step 420. In step 424, the intermediate node device writes third data to the ambient IoT device based on the second air interface signaling.

In some embodiments, the feedback message is used to indicate completion of the data read operation and/or the data write operation on the ambient IoT device.

In some embodiments, the feedback message is used to indicate success of the data read operation and/or the data write operation on the ambient IoT device.

In some embodiments, the feedback message includes a first value. The first value is used to indicate the result/completion/success of the data read operation and/or the data write operation on the ambient IoT device. The first value may be 1.

In some embodiments, the feedback message includes a second value. The second value is used to indicate the result/incompletion/failure of the data read operation and/or the data write operation on the ambient IoT device. The second value may be 0.

In the embodiments, the intermediate node device may assist the network device in performing the data read operation and/or the data write operation on the ambient IoT device, enabling the network device and/or the intermediate node device to perform the data read operation separately, the data write operation separately, or the data read operation and the data write operation simultaneously on the ambient IoT device, thereby expanding application scenarios.

It should be understood that step 410 may be implemented independently as a data receiving method performed by the intermediate node device, in which case step 420, step 430, and step 440 are optional. Step 420 may be implemented independently as a data transmitting method performed by the intermediate node device, in which case step 410, step 430, and step 440 are optional. Step 430 may be implemented independently as a data receiving method performed by the intermediate node device, in which case step 410, step 420, and step 440 are optional. Step 410 and step 420 may be combined and implemented as a data processing method performed by the intermediate node device, in which case step 430 and step 440 are optional. Step 410 and step 430 may be combined and implemented as a data receiving method performed by the intermediate node device, in which case step 410 and step 420 are optional. Step 410 and step 440 may be combined and implemented as a data processing method performed by the intermediate node device, in which case step 420 and step 430 are optional. Step 420 and step 430 may be combined and implemented as a data processing method performed by the intermediate node device, in which case step 410 and step 440 are optional. Step 420 and step 440 may be combined and implemented as a data transmitting method performed by the intermediate node device, in which case step 410 and step 430 are optional. Step 430 and step 440 may be combined and implemented as a data transmitting method and a data feedback method performed by the intermediate node device, in which case step 410 and step 420 are optional. Step 410, step 420, and step 430 may be combined and implemented as a data processing method performed by the intermediate node device, in which case step 440 is optional. Step 420, step 430, and step 440 may be combined and implemented as a data processing method and a data feedback method performed by the intermediate node device, in which case step 410 is optional.

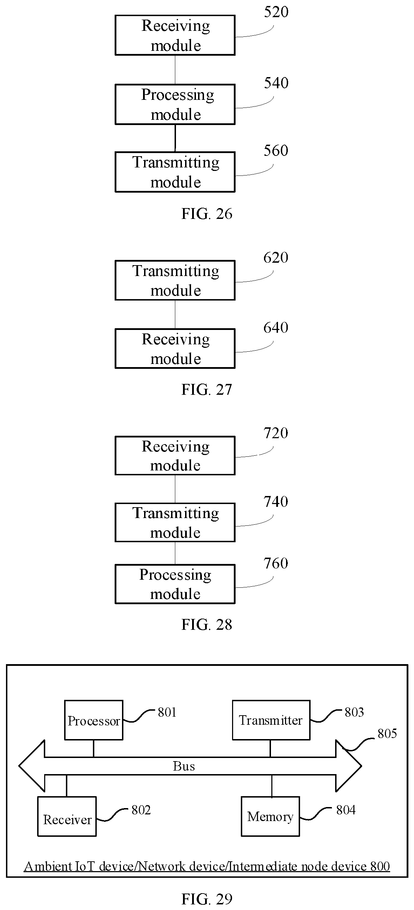

FIG. 26 is a block diagram of a communication apparatus for an ambient IoT device according to some embodiments of the present disclosure. The apparatus may be implemented as an ambient IoT device or a part of an ambient IoT device via software, hardware, or a combination thereof. The apparatus includes at least part of a receiving module 520, a processing module 540, and a transmitting module 560. The function of the receiving module 520 may be implemented by a receiver in the ambient IoT device. The function of the processing module 540 may be implemented by a processor in the ambient IoT device. The function of the transmitting module 560 may be implemented by a transmitter in the ambient IoT device.

The receiving module 520 is configured to receive air interface signaling from a first device.

The processing module 540 is configured to perform at least one of a data read operation or a data write operation on the ambient IoT device based on the air interface signaling.

The transmitting module 560 is configured to transmit a feedback message to the first device.

In some embodiments, the first device is configured to transmit the air interface signaling.

In some embodiments, the first device is configured to forward the air interface signaling.

In some embodiments, the first device includes at least one of:
- a dedicated device;
- a network device; or
- an intermediate node device.

In some embodiments, the dedicated device is dedicated to performing the data write operation on the ambient IoT device.

In some embodiments, the dedicated device includes at least one of: a terminal device, a smart phone, a CPE, a base station device, or a network device.

In some embodiments, the intermediate node device is configured to assist the network device in performing the data read operation and/or the data write operation.

In some embodiments, the intermediate node device includes at least one of: a terminal device, a smart phone, a CPE, a base station device, or a handheld device.

In some embodiments, the air interface signaling is used to instruct the data read operation and/or the data write operation on the ambient IoT device.

In some embodiments, the air interface signaling is used to control the data read operation and/or the data write operation on the ambient IoT device.

In some embodiments, the air interface signaling is used to instruct the data read operation and/or the data write operation on the ambient IoT device.

In some embodiments, the air interface signaling carries at least one of:
- an identifier of the data read operation;
- a device identifier of the ambient IoT device;
- a temporary key that authorizes the data read operation on the ambient IoT device;
- a signal structure and/or signal content for performing the data read operation on the ambient IoT device;
- an identifier for performing the data read operation on the ambient IoT device; or
- an identifier of the intermediate node device.

In some embodiments, the identifier of the data read operation may be indicated by a field or a sequence. The sequence carries the identifier dedicated to indicating the data read operation.

In some embodiments, the signal structure and/or the signal content for performing the data read operation on the ambient IoT device may include at least one of a preamble or prefix information.

In some embodiments, the identifier of the intermediate node device includes an ID.

In some embodiments, the air interface signaling used to instruct the data read operation on the ambient IoT device is also referred to as first air interface signaling.

In some embodiments, the receiving module 520 is configured to receive the first air interface signaling from the network device; and the processing module 540 is configured to transmit first data to the network device based on the first air interface signaling. The first air interface signaling is used to instruct the data read operation on the ambient IoT device. The first air interface signaling is generated by the network device.

In some embodiments, the receiving module 520 is configured to receive the first air interface signaling forwarded by the intermediate node device; and the processing module 540 is configured to transmit first data to the network device based on the first air interface signaling. The first air interface signaling is used to instruct the data read operation on the ambient IoT device. The first air interface signaling is generated by the network device.

In some embodiments, the receiving module 520 is configured to receive the first air interface signaling forwarded by the intermediate node device; and the processing module 540 is configured to transmit first data to the intermediate node device based on the first air interface signaling. The first air interface signaling is used to instruct the data read operation on the ambient IoT device. The first air interface signaling is generated by the network device. The intermediate node device is further configured to forward the first data to the network device, enabling the network device to acquire the first data of the ambient IoT device.

In some embodiments, the receiving module 520 is configured to receive data read signaling from the intermediate node device; and the processing module 540 is configured to transmit first data to the network device based on the data read signaling. The data read signaling is used to instruct the data read operation on the ambient IoT device. The data read signaling is generated by the intermediate node device based on the first air interface signaling, and the first air interface signaling is generated by the network device.

In some embodiments, the data read signaling is control signaling used to instruct the data read operation on the ambient IoT device.

In some embodiments, the data read signaling is generated by the intermediate node device based on the received first air interface signaling. The first air interface signaling is generated by the network device and transmitted by the network device to the intermediate node device.

In some embodiments, information carried by the data read signaling may be the same as, partially the same as, or completely different from information carried by the first air interface signaling.

In some embodiments, the data read signaling carries at least one of:
- an identifier of the data read operation;
- a device identifier of the ambient IoT device;
- a temporary key that authorizes the data read operation on the ambient IoT device;
- a signal structure and/or signal content for performing the data read operation on the ambient IoT device;
- an identifier for performing the data read operation on the ambient IoT device; or
- an identifier of the intermediate node device.

In some embodiments, the ambient IoT device transmits data via active transmission and/or backscatter communication.

In some embodiments, energy used by the ambient IoT device for communication is acquired by at least one of:
- RF power harvesting based on air interface signaling from the network device;
- energy harvesting based on RF signals transmitted in advance by the network device;
- energy harvesting based on RF signals from a dedicated energy supply device, a third-party energy supply device, a handheld device (i.e., the intermediate node device), or the like;
- energy harvesting based on environmental energy other than RF energy; or
- a battery carried by the ambient IoT device.

In some embodiments, the air interface signaling carries at least one of:
- an identifier of the data write operation;
- data to be written;
- a device identifier of the ambient IoT device;
- a temporary key that authorizes the data write operation on the ambient IoT device;
- a signal structure and/or signal content for performing the data write operation on the ambient IoT device;
- an identifier for performing the data write operation on the ambient IoT device;
- an identifier of the intermediate node device; or
- an identifier of the network device.

In some embodiments, the identifier of the data write operation may be indicated by a field or a sequence. The sequence carries the identifier dedicated to indicating the data write operation.

In some embodiments, the signal structure and/or the signal content for performing the data write operation on the ambient IoT device may include at least one of a preamble or prefix information.

In some embodiments, the identifier of the intermediate node device includes an ID.

In some embodiments, the identifier of the network device includes an ID of the network device.

In some embodiments, the air interface signaling used to instruct the data write operation on the ambient IoT device is also referred to as second air interface signaling. The second air interface signaling is further used to indicate that the data write operation on the ambient IoT device is performed by the intermediate node device.

In some embodiments, the dedicated device performs the data write operation on the ambient IoT device.

In some embodiments, the receiving module 520 is configured to receive the second air interface signaling from the dedicated device; and the processing module 540 is configured to store second data written to the ambient IoT device by the dedicated node device. The second air interface signaling is used to designate the dedicated device for performing the data write operation on the ambient IoT device.

In some embodiments, the network device coordinates with the intermediate node device and triggers the intermediate node device to perform the data write operation on the ambient IoT device by transmitting the second air interface signaling to the intermediate node device.

In some embodiments, the receiving module 520 is configured to receive the second air interface signaling from the network device; and the processing module 540 is configured to store second data written to the ambient IoT device by the intermediate node device. The second air interface signaling is used to designate the intermediate node device for performing the data write operation on the ambient IoT device. The network device is configured to initiate the data write operation, or the intermediate node device is configured to initiate the data write operation.

In some embodiments, although the network device is configured to initiate the data write operation, data is actually written to the ambient IoT device by the intermediate node device due to RF power limitations.

In some embodiments, the air interface signaling used to instruct the data write operation on the ambient IoT device is also referred to as the second air interface signaling. The second air interface signaling is further used to indicate that the data write operation on the ambient IoT device is performed jointly by the network device and the intermediate node device.

In some embodiments, the network device triggers the joint execution of the data write operation on the ambient IoT device with the intermediate node device by transmitting the second air interface signaling to the intermediate node device.

In some embodiments, the receiving module 520 is configured to receive the second air interface signaling from the network device; and the processing module 540 is configured to store third data written to the ambient IoT device by the intermediate node device and fourth data written to the ambient IoT device by the network device. The second air interface signaling is used to designate the network device and the intermediate node device for performing the data write operation on the ambient IoT device.

In some embodiments, the ambient IoT device stores the data to be written in a memory.

In some embodiments, the ambient IoT device includes at least one of:
- a fixed storage area;
- an SRAM; or
- an NVRAM.

In some embodiments, in a case where the ambient IoT device only includes the fixed storage area, data is written in factory and cannot be changed afterward. For example, a device ID of the ambient IoT device is written during manufacturing.

In some embodiments, in a case where the ambient IoT device only includes the NVRAM, the ambient IoT device may support information storage during a power-off event.

In some embodiments, the dedicated device/intermediate node device and/or the network device writes data to the NVRAM of the ambient IoT device.

In some embodiments, the dedicated device/intermediate node device and/or the network device writes data to the SRAM of the ambient IoT device.

In some embodiments, the transmitting module 560 is configured to transmit the feedback message to the network device. The feedback message is used to indicate a result of the data read operation and/or the data write operation on the ambient IoT device.

In some embodiments, the transmitting module 560 is configured to transmit the feedback message to the intermediate node device. The feedback message is used to indicate a result of the data read operation and/or the data write operation on the ambient IoT device. The intermediate node device is further configured to forward the feedback message to the network device.

In some embodiments, the feedback message is used to indicate completion of the data read operation and/or the data write operation on the ambient IoT device.

In some embodiments, the feedback message is used to indicate success of the data read operation and/or the data write operation on the ambient IoT device.

In some embodiments, the feedback message includes a first value. The first value is used to indicate the result/completion/success of the data read operation and/or the data write operation on the ambient IoT device. The first value may be 1.

In some embodiments, the feedback message includes a second value. The second value is used to indicate the result/incompletion/failure of the data read operation and/or the data write operation on the ambient IoT device. The second value may be 0.

In some embodiments, the data read operation and the data write operation operate in the same band.

In some embodiments, the data write operation and the data read operation operate in different bands.

In some embodiments, the data write operation operates in a dedicated band for data writing.

In some embodiments, the ambient IoT device operates in at least one of:
- a first data reading mode where the data read operation is performed by the network device;
- a second data reading mode where the data read operation is performed by the intermediate node device;
- a first data writing mode where the data write operation is performed by the network device; or
- a second data writing mode where the data write operation is performed by the intermediate node device.

In some embodiments, the first data reading mode is also referred to as a network device data reading mode.

In some embodiments, the second data reading mode is also referred to as an intermediate node device data reading mode.

In some embodiments, the first data writing mode is also referred to as a network device data writing mode.

In some embodiments, the second data writing mode is also referred to as an intermediate node device data writing mode.

In some embodiments, the transmitting module 560 is further configured to report capability information to the network device. The capability information is used to indicate whether the ambient IoT device supports the data read operation and/or the data write operation.

In some embodiments, the network device performs the data read operation and/or the data write operation on the ambient IoT device based on the capability information reported by the ambient IoT device.

In some embodiments, the communication apparatus for the ambient IoT device includes one or more receiving modules 520, and the one or more receiving modules 520 support performing part or all of the receiving steps performed by the ambient IoT device in the above embodiments.

In some embodiments, the receiving steps performed by different receiving modules 520 are completely the same, partially the same, or completely different.

In some embodiments, the communication apparatus for the ambient IoT device includes one or more transmitting modules 560, and the one or more transmitting modules 560 support performing part or all of the transmitting steps performed by the ambient IoT device in the above embodiments.

In some embodiments, the transmitting steps performed by different transmitting modules 560 are completely the same, partially the same, or completely different.

In some embodiments, the communication apparatus for the ambient IoT device includes one or more processing modules 540, and the one or more processing modules 540 support performing part or all of the processing-related steps, part or all of the generation-related steps, and part or all of the determination-related steps performed by the ambient IoT device in the above embodiments.

In some embodiments, the steps performed by different processing modules 540 are completely the same, partially the same, or completely different.

In the embodiments, the ambient IoT device may complete the data read operation and/or the data write operation based on the air interface signaling from the network device and/or forwarded by the intermediate node device. This allows for performing the data read operation separately, the data write operation separately, or the data read operation and the data write operation simultaneously on the ambient IoT device, thereby expanding application scenarios.

FIG. 27 is a block diagram of a communication apparatus for an ambient IoT device according to some embodiments of the present disclosure. The apparatus may be implemented as a network device or a part of a network device via software, hardware, or a combination thereof. The apparatus includes at least part of a transmitting module 620 and a receiving module 640. The function of the transmitting module 620 may be implemented by a transmitter in the network device. The function of the receiving module 640 may be implemented by a receiver in the network device.

The transmitting module 620 is configured to transmit air interface signaling to a second device, wherein the air interface signaling is used to instruct a data read operation and/or a data write operation on an ambient IoT device.

The receiving module 640 is configured to receive data and/or a feedback message from the second device, wherein the feedback message is used to indicate a result of the data read operation and/or the data write operation on the ambient IoT device.

In some embodiments, the second device is configured to receive the air interface signaling.

In some embodiments, the second device is configured to perform the data read operation and/or the data write operation based on the air interface signaling.

In some embodiments, the second device includes at least one of:
- an ambient IoT device; or
- an intermediate node device.

In some embodiments, the intermediate node device is configured to assist the network device in performing the data read operation and/or the data write operation on the ambient IoT device.

In some embodiments, the intermediate node device includes at least one of: a terminal device, a smart phone, a CPE, a base station device, or a handheld device.

In some embodiments, the air interface signaling is used to instruct the data read operation and/or the data write operation on the ambient IoT device.

In some embodiments, the air interface signaling is used to control the data read operation and/or the data write operation on the ambient IoT device.

In some embodiments, the air interface signaling is used to instruct the data read operation or the data write operation on the ambient IoT device.

In some embodiments, the air interface signaling carries at least one of:
- an identifier of the data read operation;
- a device identifier of the ambient IoT device;
- a temporary key that authorizes the data read operation on the ambient IoT device;
- a signal structure and/or signal content for performing the data read operation on the ambient IoT device; or
- an identifier for performing the data read operation on the ambient IoT device; or
- an identifier of the intermediate node device.

In some embodiments, the identifier of the data read operation may be indicated by a field or a sequence. The sequence carries the identifier dedicated to indicating the data read operation.

In some embodiments, the signal structure and/or the signal content for performing the data read operation on the ambient IoT device may include at least one of a preamble or prefix information.

In some embodiments, the identifier of the intermediate node device includes an ID.

In some embodiments, the air interface signaling used to instruct the data read operation on the ambient IoT device is also referred to as first air interface signaling.

In some embodiments, the transmitting module 620 is configured to transmit the first air interface signaling to the ambient IoT device; and the receiving module 640 is configured to receive first data from the ambient IoT device. The first air interface signaling is used to instruct the data read operation on the ambient IoT device. The first air interface signaling is generated by the network device.

In some embodiments, the transmitting module 620 is configured to transmit the first air interface signaling to the intermediate node device; and the receiving module 640 is configured to receive first data from the ambient IoT device. The first air interface signaling is used to instruct the data read operation on the ambient IoT device. The intermediate node device is further configured to forward the first air interface signaling to the ambient IoT device. The first air interface signaling is generated by the network device.

In some embodiments, the transmitting module 620 is configured to transmit the first air interface signaling to the intermediate node device; and the receiving module 640 is configured to receive first data of the ambient IoT device forwarded by the intermediate node device. The first air interface signaling is used to instruct the data read operation on the ambient IoT device. The intermediate node device is further configured to forward the first air interface signaling to the ambient IoT device. The intermediate node device is further configured to forward the first data to the network device.

In some embodiments, the receiving module 640 is configured to receive a first request signal from the intermediate node device, wherein the first request signal is used to request the data read operation on the ambient IoT device; and the transmitting module 620 is configured to transmit the first air interface signaling to the intermediate node device based on the first request signal, wherein the first air interface signaling is used to instruct the data read operation on the ambient IoT device. The first air interface signaling further carries one or more configuration parameters for performing the data read operation on the ambient IoT device.

In some embodiments, the air interface signaling carries at least one of:
- an identifier of the data write operation;
- data to be written;
- a device identifier of the ambient IoT device;
- a temporary key that authorizes the data write operation on the ambient IoT device;
- a signal structure and/or signal content for performing the data write operation on the ambient IoT device;
- an identifier for performing the data write operation on the ambient IoT device;
- an identifier of the intermediate node device; or
- an identifier of the network device.

In some embodiments, the identifier of data write operation may be indicated by a field or a sequence. The sequence carries the identifier dedicated to indicating the data write operation.

In some embodiments, the signal structure and/or the signal content for performing the data write operation on the ambient IoT device may include at least one of a preamble and prefix information.

In some embodiments, the identifier of the intermediate node device includes an ID.

In some embodiments, the identifier of the network device includes an ID of the network device.

In some embodiments, the air interface signaling used to instruct the data write operation on the ambient IoT device is also referred to as second air interface signaling. The second air interface signaling is further used to indicate that the data write operation on the ambient IoT device is performed by the intermediate node device.

In some embodiments, the transmitting module 620 is configured for the network device to transmit the second air interface signaling to the intermediate node device; and the receiving module 640 is configured to receive a feedback message from the ambient IoT device or forwarded by the intermediate node device. The second air interface signaling is used to instruct the data write operation on the ambient IoT device.

In some embodiments, the network device initiates the data write operation and coordinates with the intermediate node device to cause the intermediate node device to perform the data write operation on the ambient IoT device.

In some embodiments, the receiving module 640 is configured to receive a second request signal from the intermediate node device, wherein the second request signal is used to request the data write operation on the ambient IoT device; and the transmitting module 620 is configured to transmit the second air interface signaling to the intermediate node device based on the second request signal. The second air interface signaling is used to instruct the data write operation on the ambient IoT device. The second air interface signaling further carries one or more configuration parameters for the data write operation on the ambient IoT device.

In some embodiments, the intermediate node device initiates the data write operation, and the network device coordinates with the intermediate node device to cause the intermediate node device to perform the data write operation on the ambient IoT device.

In some embodiments, the air interface signaling used to instruct the data write operation on the ambient IoT device is also referred to as the second air interface signaling. The second air interface signaling is further used to indicate that the data write operation on the ambient IoT device is performed jointly by the network device and the intermediate node device.

In some embodiments, the intermediate node device initiates the data write operation, or alternatively, the network device initiates the data write operation. The network device coordinates with the intermediate node device, and jointly performs the data write operation on the ambient IoT device with the intermediate node device.

In some embodiments, the transmitting module 620 is configured to transmit the second air interface signaling to the ambient IoT device; and the receiving module 640 is configured to receive a feedback message from the ambient IoT device or forwarded by the intermediate node device. The second air interface signaling is used to designate the network device and the intermediate node device for performing the data write operation on the ambient IoT device.

In some embodiments, the dedicated device/intermediate node device and/or the network device writes data to an NVRAM of the ambient IoT device.

In some embodiments, the dedicated device/intermediate node device and/or the network device writes data to an SRAM of the ambient IoT device.

In some embodiments, the network device writes fourth data to the ambient IoT device based on the second air interface signaling.

In some embodiments, the feedback message is used to indicate completion of the data read operation and/or the data write operation on the ambient IoT device.

In some embodiments, the feedback message is used to indicate success of the data read operation and/or the data write operation on the ambient IoT device.

In some embodiments, the feedback message includes a first value. The first value is used to indicate the result/completion/success of the data read operation and/or the data write operation on the ambient IoT device. The first value may be 1.

In some embodiments, the feedback message includes a second value. The second value is used to indicate the result/incompletion/failure of the data read operation and/or the data write operation on the ambient IoT device. The second value may be 0.

In some embodiments, the receiving module 640 is configured to receive capability information from the ambient IoT device, wherein the capability information is used to indicate whether the ambient IoT device supports the data read operation and/or the data write operation.

In some embodiments, the network device performs the data read operation and/or the data write operation on the ambient IoT device based on the capability information reported by the ambient IoT device.

In some embodiments, the communication apparatus for the ambient IoT device includes one or more receiving modules 640, and the one or more receiving modules 640 support performing part or all of the receiving steps performed by the ambient IoT device in the above embodiments.

In some embodiments, the receiving steps performed by different receiving modules 640 are completely the same, partially the same, or completely different.

In some embodiments, the communication apparatus for the ambient IoT device includes one or more transmitting modules 620, and the one or more transmitting modules 620 support performing part or all of the transmitting steps performed by the ambient IoT device in the above embodiments.

In some embodiments, the transmitting steps performed by different transmitting modules 620 are completely the same, partially the same, or completely different.

In some embodiments, the communication apparatus for the ambient IoT device includes one or more processing modules 540, and the one or more processing modules 540 support performing part or all of the processing-related steps, part or all of the generation-related steps, and part or all of the determination-related steps performed by the ambient IoT device in the above embodiments.

In some embodiments, the steps performed by different processing modules 540 are completely the same, partially the same, or completely different.

In the embodiments, the network device may perform the data read operation and/or the data write operation on the ambient IoT device in combination with the intermediate node device. This allows for performing the data read operation separately, the data write operation separately, or the data read operation and the data write operation simultaneously on the ambient IoT device, thereby expanding application scenarios.

FIG. 28 is a block diagram of a communication apparatus for an ambient IoT device according to some embodiments of the present disclosure. The apparatus may be implemented as an intermediate node device or a part of an intermediate node device via software, hardware, or a combination thereof. The apparatus includes at least part of a receiving module 720 and a transmitting module 740. The function of the receiving module 720 may be implemented by a receiver in the intermediate node device. The function of the transmitting module 740 may be implemented by a transmitter in the intermediate node device. The apparatus further includes a processing module 760, and the function of the processing module 760 may be implemented by a processor in the intermediate node device.

The receiving module 720 is configured to receive air interface signaling from a network device.

The transmitting module 740 is configured to transmit the air interface signaling to an ambient IoT device.

The receiving module 720 is further configured to receive data and/or a feedback message from the ambient IoT device.

The transmitting module 740 is further configured to transmit the data and/or the feedback message to the network device.

In some embodiments, the intermediate node device is configured to assist the network device in performing a data read operation and/or a data write operation.

In some embodiments, the intermediate node device includes at least one of: a terminal device, a smart phone, a CPE, a base station device, or a handheld device.

In some embodiments, the air interface signaling is used to instruct a data read operation and/or a data write operation on the ambient IoT device.

In some embodiments, the air interface signaling is used to control a data read operation and/or a data write operation on the ambient IoT device.

In some embodiments, the air interface signaling is used to instruct a data read operation and/or a data write operation on the ambient IoT device.

In some embodiments, the air interface signaling carries at least one of:
- an identifier of a data read operation;
- a device identifier of the ambient IoT device;
- a temporary key that authorizes a data read operation on the ambient IoT device;
- a signal structure and/or signal content for performing a data read operation on the ambient IoT device;
- an identifier for performing a data read operation on the ambient IoT device; or
- an identifier of the intermediate node device.

In some embodiments, the identifier of the data read operation may be indicated by a field or a sequence. The sequence carries the identifier dedicated to indicating the data read operation.

In some embodiments, the signal structure and/or the signal content for performing the data read operation on the ambient IoT device may include at least one of a preamble or prefix information.

In some embodiments, the identifier of the intermediate node device includes an ID.

In some embodiments, the air interface signaling used to instruct the data read operation on the ambient IoT device is also referred to as first air interface signaling.

In some embodiments, the network device initiates the data read operation. The receiving module 720 is configured to receive the first air interface signaling from the network device; and the transmitting module 740 is configured to transmit the first air interface signaling to the ambient IoT device. The first air interface signaling is used to instruct the data read operation on the ambient IoT device, and the first air interface signaling is generated by the network device.

In some embodiments, the intermediate node device initiates the data read operation. The transmitting module 740 is configured to transmit a first request signal to the network device, wherein the first request signal is used to request the data read operation on the ambient IoT device; and the receiving module 720 is configured to receive the first air interface signaling from the network device, wherein the first air interface signaling is used to instruct the data read operation on the ambient IoT device.

In some embodiments, upon the receiving module 720 receiving the first air interface signaling from the network device, the processing module 760 is configured to generate data read signaling based on the first air interface signaling, wherein the data read signaling is used to instruct the data read operation on the ambient IoT device. Accordingly, the transmitting module 740 is configured to transmit the data read signaling to the ambient IoT device.

In some embodiments, the data read signaling is control signaling used to instruct the data read operation on the ambient IoT device.

In some embodiments, the data read signaling is generated by the intermediate node device based on the received first air interface signaling, and the first air interface signaling is generated by the network device and transmitted by the network device to the intermediate node device.

In some embodiments, information carried by the data read signaling may be the same as, partially the same as, or completely different from information carried by the first air interface signaling.

In some embodiments, the data read signaling carries at least one of:
- an identifier of the data read operation;
- a device identifier of the ambient IoT device;
- a temporary key that authorizes the data read operation on the ambient IoT device;
- a signal structure and/or signal content for performing the data read operation on the ambient IoT device;
- an identifier for performing the data read operation on the ambient IoT device; or
- an identifier of the intermediate node device.

In some embodiments, in performing the data read operation on the ambient IoT device, the receiving module 720 is configured to receive first data from the ambient IoT device; and the transmitting module 740 is configured to transmit the first data to the network device.

In some embodiments, the air interface signaling carries at least one of:
- an identifier of a data write operation;
- data to be written;
- a device identifier of the ambient IoT device;
- a temporary key that authorizes a data write operation on the ambient IoT device;
- a signal structure and/or signal content for performing a data write operation on the ambient IoT device;
- an identifier for performing a data write operation on the ambient IoT device;
- an identifier of the intermediate node device; or
- an identifier of the network device.

In some embodiments, the identifier of the data write operation may be indicated by a field or a sequence. The sequence carries the identifier dedicated to indicating the data write operation.

In some embodiments, the signal structure and/or the signal content for performing the data write operation on the ambient IoT device may include at least one of a preamble or prefix information.

In some embodiments, the identifier of the intermediate node device includes an ID.

In some embodiments, the identifier of the network device includes an ID of the network device.

In some embodiments, the air interface signaling used to instruct the data write operation on the ambient IoT device is also referred to as second air interface signaling. The second air interface signaling is further used to indicate that the data write operation on the ambient IoT device is performed by the intermediate node device.

In some embodiments, the intermediate node device initiates the data write operation, and the network device coordinates with the intermediate node device to cause the intermediate node device to perform the data write operation on the ambient IoT device. The transmitting module 740 is configured to transmit a second request signal to the network device, wherein the second request signal is used to request the data write operation on the ambient IoT device; the receiving module 720 is configured to receive the second air interface signaling from the network device, wherein the second air interface signaling is used to designate the intermediate node device for performing the data write operation on the ambient IoT device; and the transmitting module 740 is further configured to transmit the second air interface signaling to the ambient IoT device. The intermediate node device is configured to initiate the data write operation.

In some embodiments, the network device initiates the data write operation and coordinates with the intermediate node device to cause the intermediate node device to perform the data write operation on the ambient IoT device. The receiving module 720 is configured to receive the second air interface signaling from the network device, wherein the second air interface signaling is used to designate the intermediate node device for performing the data write operation on the ambient IoT device; and the transmitting module 740 is configured to transmit the second air interface signaling to the ambient IoT device. The network device is configured to initiate the data write operation.

In some embodiments, the processing module 760 is configured to write second data to the ambient IoT device based on the second air interface signaling.

In some embodiments, the air interface signaling used to instruct the data write operation on the ambient IoT device is also referred to as the second air interface signaling. The second air interface signaling is further used to indicate that the data write operation on the ambient IoT device is performed jointly by the network device and the intermediate node device.

In some embodiments, the intermediate node device and/or the network device initiates the data write operation, and the network device and the intermediate node device jointly perform the data write operation on the ambient IoT device. The receiving module 720 is configured to receive the second air interface signaling from the network device, wherein the second air interface signaling is used to designate the network device and the intermediate node device for performing the data write operation on the ambient IoT device. In step 420, the intermediate node device transmits the second air interface signaling to the ambient IoT device.

In some embodiments, the processing module 760 is configured to write third data to the ambient IoT device based on the second air interface signaling.

In some embodiments, the feedback message is used to indicate completion of the data read operation and/or the data write operation on the ambient IoT device.

In some embodiments, the feedback message is used to indicate success of the data read operation and/or the data write operation on the ambient IoT device.

In some embodiments, the feedback message includes a first value. The first value is used to indicate the result/completion/success of the data read operation and/or the data write operation on the ambient IoT device. The first value may be 1.

In some embodiments, the feedback message includes a second value. The second value is used to indicate the result/incompletion/failure of the data read operation and/or the data write operation on the ambient IoT device. The second value may be 0.

In some embodiments, the communication apparatus for the ambient IoT device includes one or more receiving modules 720, and the one or more receiving modules 720 support performing part or all of the receiving steps performed by the ambient IoT device in the above embodiments.

In some embodiments, the receiving steps performed by different receiving modules 720 are completely the same, partially the same, or completely different.

In some embodiments, the communication apparatus for the ambient IoT device includes one or more transmitting modules 740, and the one or more transmitting modules 740 support performing part or all of the transmitting steps performed by the ambient IoT device in the above embodiments.

In some embodiments, the transmitting steps performed by different transmitting modules 740 are completely the same, partially the same, or completely different.

In some embodiments, the communication apparatus for the ambient IoT device includes one or more processing modules 760, and the one or more processing modules 760 support performing part or all of the processing-related steps, part or all of the generation-related steps, and part or all of the determination-related steps performed by the ambient IoT device in the above embodiments.

In some embodiments, the steps performed by different processing modules 760 are completely the same, partially the same, or completely different.

In the embodiments, the intermediate node device may assist the network device in performing the data read operation and/or the data write operation on the ambient IoT device, enabling the network device and/or the intermediate node device to perform the data read operation separately, the data write operation separately, or the data read operation and the data write operation simultaneously on the ambient IoT device, thereby expanding application scenarios.

FIG. 29 is a structural schematic diagram of a communication device according to some embodiments of the present disclosure. The communication device 800 may include one or more of an ambient IoT device, a network device, or an intermediate node device. The communication device 800 includes: a processor 801, a receiver 802, a transmitter 803, a memory 804, and a bus 805.

The processor 801 includes one or more processing cores. The processor 801 executes various functional applications and performs information processing by running software programs and modules. In some embodiments, the processor 801 may be configured to implement the functions and steps of the processing modules as described above.

The receiver 802 and the transmitter 803 may be implemented as a communication assembly, which may be a communication chip. The communication assembly may be referred to as a transceiver. In some embodiments, the receiver 802 may be configured to implement the functions and steps of the receiving modules as described above, and the transmitter 803 may be configured to implement the functions and steps of the transmitting module as described above.

The memory 804 is communicably connected to the processor 801 via the bus 805.

The memory 804 is configured to store at least one instruction, and the processor 801 is configured to execute the at least one instruction to perform the steps in the above method embodiments.

In addition, the memory 804 may be implemented by any type of a volatile or non-volatile storage device or a combination thereof. The volatile or non-volatile storage device includes, but not limited to: a magnetic or optical disk, an electrically-erasable programmable read-only memory (EEPROM), an erasable programmable read-only memory (EPROM), an SRAM, a read-only memory (ROM), a magnetic memory, a flash memory, and a programmable ROM (PROM).

In some embodiments, the receiver 802 independently receives signals/data, or the processor 801 controls the receiver 802 to receive signals/data, or the processor 801 requests the receiver 802 to receive signals/data, or the processor 801 cooperates with the receiver 802 to receive signals/data.

In some embodiments, the transmitter 803 independently transmits signals/data, or the processor 801 controls the transmitter 803 to transmit signals/data, or the processor 801 requests the transmitter 803 to transmit signals/data, or the processor 801 cooperates with the transmitter 803 to transmit signals/data.

In some embodiments, the processor 801 and the receiver 802 may be implemented as a single module, or the processor 801 may be implemented as a part of the receiver 802.

In some embodiments, the receiver 802 may be implemented as a receiving machine. In some embodiments, the receiving machine includes the processor 801 or does not include the processor 801.

In some embodiments, the processor 801 and the transmitter 803 may be implemented as a single module, or the processor 801 may be implemented as a part of the transmitter 803.

In some embodiments, the transmitter 803 may be implemented as a transmitting machine. In some embodiments, the transmitting machine includes the processor 801 or does not include the processor 801.

In some embodiments, a computer-readable storage medium is further provided. The computer-readable storage medium stores one or more executable instructions or at least one program. The one or more executable instructions or the at least one program, when loaded and run by a processor, causes the processor to perform the communication method for the ambient IoT device according to the above method embodiments.

In some embodiments, a chip is further provided. The chip includes programmable logic circuitry or one or more programs. The chip is configured to perform the communication method for the ambient IoT device according to the above method embodiments based on the programmable logic circuitry or the one or more programs.

In some embodiments, a computer program product or a computer program is further provided. The computer program product or the computer program includes one or more computer instructions stored in a computer-readable storage medium. The one or more computer instructions, when read by a processor of a communication device from the computer-readable storage medium and executed by the processor, cause the communication device 800 to perform the communication method for the ambient IoT device according to the above method embodiments.

Those skilled in the art should be aware that in the one or more examples described above, the functions described in the embodiments of the present disclosure may be implemented using hardware, software, firmware, or any combination thereof. The functions, when implemented using software, are stored in a computer-readable medium or transmitted as one or more instructions or codes on the computer-readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

Described above are merely optional embodiments of the present disclosure and are not intended to limit the present disclosure. Any modifications, equivalent substitutions, improvements, or the like, made within the spirit and principle of the present disclosure shall fall within the protection scope of the present disclosure.

## Claims

1. A communication method for an ambient Internet of things, IoT, device, performed by the ambient IoT device, the method comprising:
receiving air interface signaling from a first device; and
performing at least one of a data read operation or a data write operation on the ambient IoT device based on the air interface signaling.

2. The method according to claim 1, wherein the first device comprises at least one of:
a network device; or
an intermediate node device, configured to assist the network device in performing at least one of the data read operation or the data write operation.

3. The method according to claim 2, wherein the air interface signaling carries at least one of:
an identifier of the data read operation;
a device identifier of the ambient IoT device;
a temporary key that authorizes the data read operation on the ambient IoT device;
a signal structure and/or signal content for performing the data read operation on the ambient IoT device;
an identifier for performing the data read operation on the ambient IoT device; or
an identifier of the intermediate node device.

4. The method according to claim 2, wherein the air interface signaling carries at least one of:
an identifier of the data write operation;
data to be written;
a device identifier of the ambient IoT device;
a temporary key that authorizes the data write operation on the ambient IoT device;
a signal structure and/or signal content for performing the data write operation on the ambient IoT device;
an identifier for performing the data write operation on the ambient IoT device;
an identifier of the intermediate node device; or
an identifier of the network device.

5. The method according to any one of claims 1 to 3, wherein receiving the air interface signaling from the first device and performing the data read operation on the ambient IoT device based on the air interface signaling comprise:
receiving first air interface signaling from a network device, wherein the first air interface signaling is used to instruct the data read operation on the ambient IoT device; and
transmitting first data to the network device based on the first air interface signaling.

6. The method according to any one of claims 1 to 3, wherein receiving the air interface signaling from the first device and performing the data read operation on the ambient IoT device based on the air interface signaling comprise:
receiving first air interface signaling forwarded by an intermediate node device, wherein the first air interface signaling is generated by a network device and used to instruct the data read operation on the ambient IoT device; and
transmitting first data to the network device based on the first air interface signaling.

7. The method according to any one of claims 1 to 3, wherein receiving the air interface signaling from the first device and performing the data read operation on the ambient IoT device based on the air interface signaling comprise:
receiving first air interface signaling forwarded by an intermediate node device, wherein the first air interface signaling is generated by a network device and used to instruct the data read operation on the ambient IoT device; and
transmitting first data to the intermediate node device based on the first air interface signaling, wherein the intermediate node device is further configured to forward the first data to the network device.

8. The method according to any one of claims 1 to 3, wherein receiving the air interface signaling from the first device and performing the data read operation on the ambient IoT device based on the air interface signaling comprise:
receiving data read signaling from an intermediate node device, wherein the data read signaling is generated by the intermediate node device based on first air interface signaling, the first air interface signaling being generated by a network device, and the data read signaling is used to instruct the data read operation on the ambient IoT device; and
transmitting first data to the network device based on the data read signaling.

9. The method according to claim 4, wherein receiving the air interface signaling from the first device and performing the data write operation on the ambient IoT device based on the air interface signaling comprise:
receiving second air interface signaling from the network device, wherein the second air interface signaling is used to designate the intermediate node device for performing the data write operation on the ambient IoT device; and
storing second data written to the ambient IoT device by the intermediate node device;
wherein the network device is configured to initiate the data write operation, or the intermediate node device is configured to initiate the data write operation.

10. The method according to claim 4, wherein receiving the air interface signaling from the first device and performing the data write operation on the ambient IoT device based on the air interface signaling comprise:
receiving second air interface signaling from the network device, wherein the second air interface signaling is used to designate the network device and the intermediate node device for performing the data write operation on the ambient IoT device; and
storing third data written to the ambient IoT device by the intermediate node device and fourth data written to the ambient IoT device by the network device.

11. The method according to any one of claims 1 to 10, further comprising:
transmitting a feedback message to the first device, wherein the feedback message is used to indicate a result of at least one of the data read operation or the data write operation on the ambient IoT device.

12. The method according to any one of claims 1 to 10, wherein
the data read operation and the data write operation operate within the same band; or
the data read operation and the data write operation operate within different bands.

13. The method according to claim 12, wherein
the data write operation operates in a dedicated band for data writing.

14. The method according to any one of claims 1 to 10, wherein the ambient IoT device operates in at least one of:
a first data reading mode where the data read operation is performed by a network device;
a second data reading mode where the data read operation is performed by an intermediate node device;
a first data writing mode where the data write operation is performed by a network device; or
a second data writing mode where the data write operation is performed by an intermediate node device.

15. The method according to any one of claims 2 to 14, further comprising:
reporting capability information to the network device, wherein the capability information is used to indicate whether the ambient IoT device supports at least one of the data read operation or the data write operation.

16. A communication method for an ambient Internet of things, IoT, device, performed by a network device, the method comprising:
transmitting air interface signaling to a second device, wherein the air interface signaling is used to instruct a data read operation or a data write operation on the ambient IoT device; and
receiving at least one of data or a feedback message from the second device, wherein the feedback message is used to indicate a result of at least one of the data read operation or the data write operation on the ambient IoT device.

17. The method according to claim 16, wherein the second device comprises at least one of:
the ambient IoT device; or
an intermediate node device, configured to assist the network device in performing at least one of the data read operation or the data write operation on the ambient IoT device.

18. The method according to claim 17, wherein the air interface signaling carries at least one of:
an identifier of the data read operation;
a device identifier of the ambient IoT device;
a temporary key that authorizes the data read operation on the ambient IoT device;
a signal structure and/or signal content for performing the data read operation on the ambient IoT device;
an identifier for performing the data read operation on the ambient IoT device; or
an identifier of the intermediate node device.

19. The method according to claim 17, wherein the air interface signaling carries at least one of:
an identifier of the data write operation;
data to be written;
a device identifier of the ambient IoT device;
a temporary key that authorizes the data write operation on the ambient IoT device;
a signal structure and/or signal content for performing the data write operation on the ambient IoT device;
an identifier for performing the data write operation on the ambient IoT device;
an identifier of the intermediate node device; or
an identifier of the network device.

20. The method according to any one of claims 16 to 18, wherein transmitting the air interface signaling to the second device and receiving the data from the second device comprise:
transmitting first air interface signaling to the ambient IoT device, wherein the first air interface signaling is used to instruct the data read operation on the ambient IoT device; and
receiving first data from the ambient IoT device.

21. The method according to any one of claims 16 to 18, wherein transmitting the air interface signaling to the second device and receiving the data from the second device comprise:
transmitting first air interface signaling to an intermediate node device, wherein the first air interface signaling is used to instruct the data read operation on the ambient IoT device; and
receiving first data from the ambient IoT device.

22. The method according to any one of claims 16 to 18, wherein transmitting the air interface signaling to the second device and receiving the data from the second device comprise:
transmitting first air interface signaling to an intermediate node device, wherein the first air interface signaling is used to instruct the data read operation on the ambient IoT device; and
receiving first data of the ambient IoT device forwarded by the intermediate node device.

23. The method according to any one of claims 16 to 18, wherein transmitting the air interface signaling to the second device further comprises:
receiving a first request signal from an intermediate node device, wherein the first request signal is used to request the data read operation on the ambient IoT device; and
transmitting first air interface signaling to the intermediate node device based on the first request signal, wherein the first air interface signaling is used to instruct the data read operation on the ambient IoT device;
wherein the first air interface signaling further carries one or more configuration parameters for the data read operation on the ambient IoT device.

24. The method according to claim 19, wherein transmitting the air interface signaling to the second device and receiving the feedback message from the second device comprise:
transmitting second air interface signaling to the intermediate node device, wherein the second air interface signaling is used to instruct the data write operation on the ambient IoT device; and
receiving the feedback message from the ambient IoT device or forwarded by the intermediate node device.

25. The method according to claim 24, wherein transmitting the second air interface signaling to the intermediate node device further comprises:
receiving a second request signal from the intermediate node device, wherein the second request signal is used to request the data write operation on the ambient IoT device; and
transmitting the second air interface signaling to the intermediate node device based on the second request signal, wherein the second air interface signaling further carries one or more configuration parameters for the data write operation on the ambient IoT device.

26. The method according to claim 19, wherein transmitting the air interface signaling to the second device and receiving the feedback message from the second device comprise:
transmitting second air interface signaling to the ambient IoT device, wherein the second air interface signaling is used to designate the network device and the intermediate node device for performing the data write operation on the ambient IoT device; and
receiving the feedback message from the ambient IoT device or forwarded by the intermediate node device.

27. The method according to claim 26, further comprising:
writing fourth data to the ambient IoT device based on the second air interface signaling.

28. The method according to any one of claims 16 to 27, further comprising:
receiving capability information from the ambient IoT device, wherein the capability information is used to indicate whether the ambient IoT device supports at least one of the data read operation or the data write operation.

29. A communication method for an ambient Internet of things, IoT, device, performed by an intermediate node device, the method comprising:
receiving air interface signaling from a network device; and
transmitting the air interface signaling to the ambient IoT device;
wherein the air interface signaling is used to instruct at least one of a data read operation or a data write operation on the ambient IoT device.

30. The method according to claim 29, wherein the air interface signaling carries at least one of:
an identifier of the data read operation;
a device identifier of the ambient IoT device;
a temporary key that authorizes the data read operation on the ambient IoT device;
a signal structure and/or signal content for performing the data read operation on the ambient IoT device;
an identifier for performing the data read operation on the ambient IoT device; or
an identifier of the intermediate node device.

31. The method according to claim 29, wherein the air interface signaling carries at least one of:
an identifier of the data write operation;
data to be written;
a device identifier of the ambient IoT device;
a temporary key that authorizes the data write operation on the ambient IoT device;
a signal structure and/or signal content for performing the data write operation on the ambient IoT device;
an identifier for performing the data write operation on the ambient IoT device;
an identifier of the intermediate node device; or
an identifier of the network device.

32. The method according to any one of claims 29 to 31, wherein receiving the air interface signaling from the network device and transmitting the air interface signaling to the ambient IoT device comprise:
receiving first air interface signaling from the network device, wherein the first air interface signaling is generated by the network device and used to instruct the data read operation on the ambient IoT device; and
transmitting the first air interface signaling to the ambient IoT device.

33. The method according to claim 32, wherein receiving the first air interface signaling from the network device further comprises:
transmitting a first request signal to the network device, wherein the first request signal is used to request the data read operation on the ambient IoT device; and
receiving the first air interface signaling from the network device, wherein the first air interface signaling is used to instruct the data read operation on the ambient IoT device.

34. The method according to claim 32 or 33, wherein upon receiving the first air interface signaling from the network device, the method further comprises:
generating data read signaling based on the first air interface signaling, wherein the data read signaling is used to instruct the data read operation on the ambient IoT device; and
transmitting the data read signaling to the ambient IoT device.

35. The method according to claim 31, wherein receiving the air interface signaling from the network device and transmitting the air interface signaling to the ambient IoT device comprise:
receiving second air interface signaling from the network device, wherein the second air interface signaling is used to designate the intermediate node device for performing the data write operation on the ambient IoT device; and
transmitting the second air interface signaling to the ambient IoT device;
wherein the network device is configured to initiate the data write operation.

36. The method according to claim 31, wherein receiving the air interface signaling from the network device and transmitting the air interface signaling to the ambient IoT device comprise:
transmitting a second request signal to the network device, wherein the second request signal is used to request the data write operation on the ambient IoT device;
receiving second air interface signaling from the network device, wherein the second air interface signaling is used to designate the intermediate node device for performing the data write operation on the ambient IoT device; and
transmitting the second air interface signaling to the ambient IoT device;
wherein the intermediate node device is used to initiate the data write operation.

37. The method according to claim 31, wherein receiving the air interface signaling from the network device and transmitting the air interface signaling to the ambient IoT device comprise:
receiving second air interface signaling from the network device, wherein the second air interface signaling is used to designate the network device and the intermediate node device for performing the data write operation on the ambient IoT device; and
transmitting the second air interface signaling to the ambient IoT device.

38. The method according to claim 35 or 36, further comprising:
writing second data to the ambient IoT device based on the second air interface signaling.

39. The method according to claim 37, further comprising:
writing third data to the ambient IoT device based on the second air interface signaling.

40. The method according to any one of claims 29 to 39, further comprising:
receiving at least one of data or a feedback message from the ambient IoT device, wherein the feedback message is used to indicate a result of at least one of the data read operation or the data write operation on the ambient IoT device; and
transmitting at least one of the data or the feedback message to the network device.

41. A communication apparatus for an ambient Internet of things, IoT, device, comprising:
a receiving module, configured to receive air interface signaling from a first device; and
a processing module, configured to perform at least one of a data read operation or a data write operation on the ambient IoT device based on the air interface signaling.

42. The apparatus according to claim 41, wherein the first device comprises at least one of:
a network device; or
an intermediate node device, configured to assist the network device in performing at least one of the data read operation or the data write operation.

43. The apparatus according to claim 42, wherein the air interface signaling carries at least one of:
an identifier of the data read operation;
a device identifier of the ambient IoT device;
a temporary key that authorizes the data read operation on the ambient IoT device;
a signal structure and/or signal content for performing the data read operation on the ambient IoT device;
an identifier for performing the data read operation on the ambient IoT device; or
an identifier of the intermediate node device.

44. The apparatus according to claim 42, wherein the air interface signaling carries at least one of:
an identifier of the data write operation;
data to be written;
a device identifier of the ambient IoT device;
a temporary key that authorizes the data write operation on the ambient IoT device;
a signal structure and/or signal content for performing the data write operation on the ambient IoT device;
an identifier for performing the data write operation on the ambient IoT device;
an identifier of the intermediate node device; or
an identifier of the network device.

45. The apparatus according to any one of claims 41 to 43, wherein
the receiving module is configured to receive first air interface signaling from a network device, wherein the first air interface signaling is used to instruct the data read operation on the ambient IoT device; and
the processing module is configured to transmit first data to the network device based on the first air interface signaling.

46. The apparatus according to any one of claims 41 to 43, wherein
the receiving module is configured to receive first air interface signaling forwarded by an intermediate node device, wherein the first air interface signaling is generated by a network device and used to instruct the data read operation on the ambient IoT device; and
the processing module is configured to transmit first data to the network device based on the first air interface signaling.

47. The apparatus according to any one of claims 41 to 43, wherein
the receiving module is configured to receive first air interface signaling forwarded by an intermediate node device, wherein the first air interface signaling is generated by a network device and used to instruct the data read operation on the ambient IoT device; and
the processing module is configured to transmit first data to the intermediate node device based on the first air interface signaling, wherein the intermediate node device is further configured to forward the first data to the network device.

48. The apparatus according to any one of claims 41 to 43, wherein
the receiving module is configured to receive data read signaling from an intermediate node device, wherein the data read signaling is generated by the intermediate node device based on first air interface signaling, the first air interface signaling being generated by a network device, and the data read signaling is used to instruct the data read operation on the ambient IoT device; and
the processing module is configured to transmit first data to the network device based on the data read signaling.

49. The apparatus according to claim 44, wherein
the receiving module is configured to receive second air interface signaling from the network device, wherein the second air interface signaling is used to designate the intermediate node device for performing the data write operation on the ambient IoT device; and
the processing module is configured to store second data written to the ambient IoT device by the intermediate node device;
wherein the network device is configured to initiate the data write operation, or the intermediate node device is configured to initiate the data write operation.

50. The apparatus according to claim 44, wherein
the receiving module is configured to receive second air interface signaling from the network device, wherein the second air interface signaling is used to designate the network device and the intermediate node device for performing the data write operation on the ambient IoT device; and
the processing module is configured to store third data written to the ambient IoT device by the intermediate node device and fourth data written to the ambient IoT device by the network device.

51. The apparatus according to any one of claims 41 to 50, further comprising:
a transmitting module, configured to transmit a feedback message to the first device, wherein the feedback message is used to indicate a result of at least one of the data read operation or the data write operation on the ambient IoT device.

52. The apparatus according to any one of claims 41 to 50, wherein
the data read operation and the data write operation operate within the same band; or
the data read operation and the data write operation operate within different bands.

53. The apparatus according to claim 52, wherein
the data write operation operates in a dedicated band for data writing.

54. The apparatus according to any one of claims 41 to 50, wherein the ambient IoT device operates in at least one of:
a first data reading mode where the data read operation is performed by a network device;
a second data reading mode where the data read operation is performed by an intermediate node device;
a first data writing mode where the data write operation is performed by a network device; or
a second data writing mode where the data write operation is performed by an intermediate node device.

55. The apparatus according to any one of claims 42 to 54, wherein
a transmitting module is configured to report capability information to the network device, wherein the capability information is used to indicate whether the ambient IoT device supports at least one of the data read operation or the data write operation.

56. A communication apparatus for an ambient Internet of things, IoT, device, comprising:
a transmitting module, configured to transmit air interface signaling to a second device, wherein the air interface signaling is used to instruct a data read operation or a data write operation on the ambient IoT device; and
a receiving module, configured to receive at least one of data or a feedback message from the second device, wherein the feedback message is used to indicate a result of at least one of the data read operation or the data write operation on the ambient IoT device.

57. The apparatus according to claim 56, wherein the second device comprises at least one of:
the ambient IoT device; or
an intermediate node device, configured to assist the network device in performing at least one of the data read operation or the data write operation on the ambient IoT device.

58. The apparatus according to claim 57, wherein the air interface signaling carries at least one of:
an identifier of the data read operation;
a device identifier of the ambient IoT device;
a temporary key that authorizes the data read operation on the ambient IoT device;
a signal structure and/or signal content for performing the data read operation on the ambient IoT device;
an identifier for performing the data read operation on the ambient IoT device; or
an identifier of the intermediate node device.

59. The apparatus according to claim 57, wherein the air interface signaling carries at least one of:
an identifier of the data write operation;
data to be written;
a device identifier of the ambient IoT device;
a temporary key that authorizes the data write operation on the ambient IoT device;
a signal structure and/or signal content for performing the data write operation on the ambient IoT device;
an identifier for performing the data write operation on the ambient IoT device;
an identifier of the intermediate node device; or
an identifier of the network device.

60. The apparatus according to any one of claims 56 to 58, wherein
the transmitting module is configured to transmit first air interface signaling to the ambient IoT device, wherein the first air interface signaling is used to instruct the data read operation on the ambient IoT device; and
the receiving module is configured to receive first data from the ambient IoT device.

61. The apparatus according to any one of claims 56 to 58, wherein
the transmitting module is configured to transmit first air interface signaling to an intermediate node device, wherein the first air interface signaling is used to instruct the data read operation on the ambient IoT device; and
the receiving module is configured to receive first data from the ambient IoT device.

62. The apparatus according to any one of claims 56 to 58, wherein
the transmitting module is configured to transmit first air interface signaling to an intermediate node device, wherein the first air interface signaling is used to instruct the data read operation on the ambient IoT device; and
the receiving module is configured to receive first data of the ambient IoT device forwarded by the intermediate node device.

63. The apparatus according to any one of claims 56 to 58, further comprising: a processing module; wherein
the transmitting module is configured to receive a first request signal from an intermediate node device, wherein the first request signal is used to request the data read operation on the ambient IoT device; and
the processing module is configured to transmit first air interface signaling to the intermediate node device based on the first request signal, wherein the first air interface signaling is used to instruct the data read operation on the ambient IoT device;
wherein the first air interface signaling further carries one or more configuration parameters for the data read operation on the ambient IoT device.

64. The apparatus according to claim 59, wherein
the transmitting module is configured to transmit second air interface signaling to the intermediate node device, wherein the second air interface signaling is used to instruct the data write operation on the ambient IoT device; and
the receiving module is configured to receive the feedback message from the ambient IoT device or forwarded by the intermediate node device.

65. The apparatus according to claim 64, wherein
the receiving module is configured to receive a second request signal from the intermediate node device, wherein the second request signal is used to request the data write operation on the ambient IoT device; and
a processing module is configured to transmit the second air interface signaling to the intermediate node device based on the second request signal, wherein the second air interface signaling further carries one or more configuration parameters for the data write operation on the ambient IoT device.

66. The apparatus according to claim 59, wherein
the transmitting module is configured to transmit second air interface signaling to the ambient IoT device, wherein the second air interface signaling is used to designate the network device and the intermediate node device for performing the data write operation on the ambient IoT device; and
the receiving module is configured to receive the feedback message from the ambient IoT device or forwarded by the intermediate node device.

67. The apparatus according to claim 66, wherein
the receiving module is configured to write fourth data to the ambient IoT device based on the second air interface signaling.

68. The apparatus according to any one of claims 56 to 67, wherein
the receiving module is configured to receive capability information from the ambient IoT device, wherein the capability information is used to indicate whether the ambient IoT device supports at least one of the data read operation or the data write operation.

69. A communication apparatus for an ambient Internet of things, IoT, device, comprising:
a receiving module, configured to receive air interface signaling from a network device; and
a transmitting module, configured to transmit the air interface signaling to the ambient IoT device;
wherein the air interface signaling is used to instruct at least one of a data read operation or a data write operation on the ambient IoT device.

70. The apparatus according to claim 69, wherein the air interface signaling carries at least one of:
an identifier of the data read operation;
a device identifier of the ambient IoT device;
a temporary key that authorizes the data read operation on the ambient IoT device;
a signal structure and/or signal content for performing the data read operation on the ambient IoT device;
an identifier for performing the data read operation on the ambient IoT device; or
an identifier of an intermediate node device.

71. The apparatus according to claim 69, wherein the air interface signaling carries at least one of:
an identifier of the data write operation;
data to be written;
a device identifier of the ambient IoT device;
a temporary key that authorizes the data write operation on the ambient IoT device;
a signal structure and/or signal content for performing the data write operation on the ambient IoT device;
an identifier for performing the data write operation on the ambient IoT device;
an identifier of an intermediate node device; or
an identifier of the network device.

72. The apparatus according to any one of claims 69 to 71, wherein
the receiving module is configured to receive first air interface signaling from the network device, wherein the first air interface signaling is generated by the network device and used to instruct the data read operation on the ambient IoT device; and
the transmitting module is configured to transmit the first air interface signaling to the ambient IoT device.

73. The apparatus according to claim 72, wherein
the transmitting module is configured to transmit a first request signal to the network device, wherein the first request signal is used to request the data read operation on the ambient IoT device; and
the receiving module is configured to receive the first air interface signaling from the network device, wherein the first air interface signaling is used to instruct the data read operation on the ambient IoT device.

74. The apparatus according to claim 72 or 73, further comprising:
a processing module, configured to generate data read signaling based on the first air interface signaling, wherein the data read signaling is used to instruct the data read operation on the ambient IoT device;
wherein the transmitting module is configured to transmit the data read signaling to the ambient IoT device.

75. The apparatus according to claim 71, wherein
the receiving module is configured to receive second air interface signaling from the network device, wherein the second air interface signaling is used to designate the intermediate node device for performing the data write operation on the ambient IoT device; and
the transmitting module is configured to transmit the second air interface signaling to the ambient IoT device;
wherein the network device is configured to initiate the data write operation.

76. The apparatus according to claim 71, wherein
the transmitting module is configured to transmit a second request signal to the network device, wherein the second request signal is used to request the data write operation on the ambient IoT device;
the receiving module is configured to receive second air interface signaling from the network device, wherein the second air interface signaling is used to designate the intermediate node device for performing the data write operation on the ambient IoT device; and
the transmitting module is further configured to transmit the second air interface signaling to the ambient IoT device;
wherein the intermediate node device is used to initiate the data write operation.

77. The apparatus according to claim 71, wherein
the receiving module is configured to receive second air interface signaling from the network device, wherein the second air interface signaling is used to designate the network device and the intermediate node device for performing the data write operation on the ambient IoT device; and
the transmitting module is configured to transmit the second air interface signaling to the ambient IoT device.

78. The apparatus according to claim 75 or 76, further comprising:
a processing module, configured to write second data to the ambient IoT device based on the second air interface signaling.

79. The apparatus according to claim 77, further comprising:
a processing module, configured to write third data to the ambient IoT device based on the second air interface signaling.

80. The apparatus according to any one of claims 69 to 79, wherein
the receiving module is configured to receive at least one of data or a feedback message from the ambient IoT device, wherein the feedback message is used to indicate a result of at least one of the data read operation or the data write operation on the ambient IoT device; and
the transmitting module is configured to transmit at least one of the data or the feedback message to the network device.

81. An ambient Internet of things, IoT, device, comprising:
a processor;
a receiver communicably connected to the processor; and
a memory, configured to store one or more instructions executable by the processor,
wherein the receiver is configured to receive air interface signaling from a first device; and the processor is configured to perform at least one of a data read operation or a data write operation on the ambient IoT device based on the air interface signaling.

82. The ambient IoT device according to claim 81, wherein the first device comprises at least one of:
a network device; or
an intermediate node device, configured to assist the network device in performing at least one of the data read operation or the data write operation.

83. The ambient IoT device according to claim 82, wherein the air interface signaling carries at least one of:
an identifier of the data read operation;
a device identifier of the ambient IoT device;
a temporary key that authorizes the data read operation on the ambient IoT device;
a signal structure and/or signal content for performing the data read operation on the ambient IoT device;
an identifier for performing the data read operation on the ambient IoT device; or
an identifier of the intermediate node device.

84. The ambient IoT device according to claim 82, wherein the air interface signaling carries at least one of:
an identifier of the data write operation;
data to be written;
a device identifier of the ambient IoT device;
a temporary key that authorizes the data write operation on the ambient IoT device;
a signal structure and/or signal content for performing the data write operation on the ambient IoT device;
an identifier for performing the data write operation on the ambient IoT device;
an identifier of the intermediate node device; or
an identifier of the network device.

85. The ambient IoT device according to any one of claims 81 to 83, further comprising: a transmitter communicably connected to the processor,
wherein the receiver is configured to receive first air interface signaling from a network device, wherein the first air interface signaling is used to instruct the data read operation on the ambient IoT device; and
the transmitter is configured to transmit first data to the network device based on the first air interface signaling.

86. The ambient IoT device according to any one of claims 81 to 83, wherein
the receiver is configured to receive first air interface signaling forwarded by an intermediate node device, wherein the first air interface signaling is generated by a network device and used to instruct the data read operation on the ambient IoT device; and
a transmitter is configured to transmit first data to the network device based on the first air interface signaling.

87. The ambient IoT device according to any one of claims 81 to 83, wherein
the receiver is configured to receive first air interface signaling forwarded by an intermediate node device, wherein the first air interface signaling is generated by a network device and used to instruct the data read operation on the ambient IoT device; and
a transmitter is configured to transmit first data to the intermediate node device based on the first air interface signaling, wherein the intermediate node device is further configured to forward the first data to the network device.

88. The ambient IoT device according to any one of claims 81 to 83, wherein
the receiver is configured to receive data read signaling from an intermediate node device, wherein the data read signaling is generated by the intermediate node device based on first air interface signaling, the first air interface signaling being generated by a network device, and the data read signaling is used to instruct the data read operation on the ambient IoT device; and
a transmitter is configured to transmit first data to the network device based on the data read signaling.

89. The ambient IoT device according to claim 84, wherein
the receiver is configured to receive second air interface signaling from the network device, wherein the second air interface signaling is used to designate the intermediate node device for performing the data write operation on the ambient IoT device; and
the processor is configured to store second data written to the ambient IoT device by the intermediate node device;
wherein the network device is configured to initiate the data write operation, or the intermediate node device is configured to initiate the data write operation.

90. The ambient IoT device according to claim 84, wherein
the receiver is configured to receive second air interface signaling from the network device, wherein the second air interface signaling is used to designate the network device and the intermediate node device for performing the data write operation on the ambient IoT device; and
the processor is configured to store third data written to the ambient IoT device by the intermediate node device and fourth data written to the ambient IoT device by the network device.

91. The ambient IoT device according to any one of claims 81 to 90, wherein
a transmitter is configured to transmit a feedback message to the first device, wherein the feedback message is used to indicate a result of at least one of the data read operation or the data write operation on the ambient IoT device.

92. The ambient IoT device according to any one of claims 81 to 90, wherein
the data read operation and the data write operation operate within the same band; or
the data read operation and the data write operation operate within different bands.

93. The ambient IoT device according to claim 92, wherein
the data write operation operates in a dedicated band for data writing.

94. The ambient IoT device according to any one of claims 81 to 90, wherein the ambient IoT device operates in at least one of:
a first data reading mode where the data read operation is performed by a network device;
a second data reading mode where the data read operation is performed by an intermediate node device;
a first data writing mode where the data write operation is performed by a network device; or
a second data writing mode where the data write operation is performed by an intermediate node device.

95. The ambient IoT device according to any one of claims 82 to 94, wherein
a transmitter is configured to report capability information to the network device, wherein the capability information is used to indicate whether the ambient IoT device supports at least one of the data read operation or the data write operation.

96. A network device, comprising:
a processor;
a transmitter communicably connected to the processor;
a receiver communicably connected to the processor; and
a memory, configured to store one or more instructions executable by the processor,
wherein the transmitter is configured to transmit air interface signaling to a second device, wherein the air interface signaling is used to instruct a data read operation or a data write operation on an ambient Internet of things, IoT, device; and the receiver is configured to receive at least one of data or a feedback message from the second device, wherein the feedback message is used to indicate a result of at least one of the data read operation or the data write operation on the ambient IoT device.

97. The network device according to claim 96, wherein the second device comprises at least one of:
the ambient IoT device; or
an intermediate node device, configured to assist the network device in performing at least one of the data read operation or the data write operation on the ambient IoT device.

98. The network device according to claim 97, wherein the air interface signaling carries at least one of:
an identifier of the data read operation;
a device identifier of the ambient IoT device;
a temporary key that authorizes the data read operation on the ambient IoT device;
a signal structure and/or signal content for performing the data read operation on the ambient IoT device;
an identifier for performing the data read operation on the ambient IoT device; or
an identifier of the intermediate node device.

99. The network device according to claim 97, wherein the air interface signaling carries at least one of:
an identifier of the data write operation;
data to be written;
a device identifier of the ambient IoT device;
a temporary key that authorizes the data write operation on the ambient IoT device;
a signal structure and/or signal content for performing the data write operation on the ambient IoT device;
an identifier for performing the data write operation on the ambient IoT device;
an identifier of the intermediate node device; or
an identifier of the network device.

100. The network device according to any one of claims 96 to 98, wherein
the transmitter is configured to transmit first air interface signaling to the ambient IoT device, wherein the first air interface signaling is used to instruct the data read operation on the ambient IoT device; and
the receiver is configured to receive first data from the ambient IoT device.

101. The network device according to any one of claims 96 to 98, wherein
the transmitter is configured to transmit first air interface signaling to an intermediate node device, wherein the first air interface signaling is used to instruct the data read operation on the ambient IoT device; and
the receiver is configured to receive first data from the ambient IoT device.

102. The network device according to any one of claims 96 to 98, wherein
the transmitter is configured to transmit first air interface signaling to an intermediate node device, wherein the first air interface signaling is used to instruct the data read operation on the ambient IoT device; and
the receiver is configured to receive first data of the ambient IoT device forwarded by the intermediate node device.

103. The network device according to any one of claims 96 to 98, wherein
the receiver is configured to receive a first request signal from an intermediate node device, wherein the first request signal is used to request the data read operation on the ambient IoT device; and
the transmitter is configured to transmit first air interface signaling to the intermediate node device based on the first request signal, wherein the first air interface signaling is used to instruct the data read operation on the ambient IoT device;
wherein the first air interface signaling further carries one or more configuration parameters for the data read operation on the ambient IoT device.

104. The network device according to claim 99, wherein
the transmitter is configured to transmit second air interface signaling to the intermediate node device, wherein the second air interface signaling is used to instruct the data write operation on the ambient IoT device; and
the receiver is configured to receive the feedback message from the ambient IoT device or forwarded by the intermediate node device.

105. The network device according to claim 104, wherein
the receiver is configured to receive a second request signal from the intermediate node device, wherein the second request signal is used to request the data write operation on the ambient IoT device; and
the transmitter is configured to transmit the second air interface signaling to the intermediate node device based on the second request signal, wherein the second air interface signaling further carries one or more configuration parameters for the data write operation on the ambient IoT device.

106. The network device according to claim 99, wherein
the transmitter is configured to transmit second air interface signaling to the ambient IoT device, wherein the second air interface signaling is used to designate the network device and the intermediate node device for performing the data write operation on the ambient IoT device; and
the receiver is configured to receive the feedback message from the ambient IoT device or forwarded by the intermediate node device.

107. The network device according to claim 106, wherein
the processor is configured to write fourth data to the ambient IoT device based on the second air interface signaling.

108. The network device according to any one of claims 96 to 107, wherein
the receiver is configured to receive capability information from the ambient IoT device, wherein the capability information is used to indicate whether the ambient IoT device supports at least one of the data read operation or the data write operation.

109. An intermediate node device, comprising:
a processor;
a transmitter communicably connected to the processor;
a receiver communicably connected to the processor; and
a memory, configured to store one or more instructions executable by the processor,
wherein the receiver is configured to receive air interface signaling from a network device; and the transmitter is configured to transmit the air interface signaling to an ambient Internet of things, IoT, device; wherein the air interface signaling is used to instruct at least one of a data read operation or a data write operation on the ambient IoT device.

110. The intermediate node device according to claim 109, wherein the air interface signaling carries at least one of:
an identifier of the data read operation;
a device identifier of the ambient IoT device;
a temporary key that authorizes the data read operation on the ambient IoT device;
a signal structure and/or signal content for performing the data read operation on the ambient IoT device;
an identifier for performing the data read operation on the ambient IoT device; or
an identifier of the intermediate node device.

111. The intermediate node device according to claim 109, wherein the air interface signaling carries at least one of:
an identifier of the data write operation;
data to be written;
a device identifier of the ambient IoT device;
a temporary key that authorizes the data write operation on the ambient IoT device;
a signal structure and/or signal content for performing the data write operation on the ambient IoT device;
an identifier for performing the data write operation on the ambient IoT device;
an identifier of the intermediate node device; or
an identifier of the network device.

112. The intermediate node device according to any one of claims 109 to 110, wherein
the receiver is configured to receive first air interface signaling from the network device, wherein the first air interface signaling is generated by the network device and used to instruct the data read operation on the ambient IoT device; and
the transmitter is configured to transmit the first air interface signaling to the ambient IoT device.

113. The intermediate node device according to claim 112, wherein
the transmitter is configured to transmit a first request signal to the network device, wherein the first request signal is used to request the data read operation on the ambient IoT device; and
the receiver is configured to receive the first air interface signaling from the network device, wherein the first air interface signaling is used to instruct the data read operation on the ambient IoT device.

114. The intermediate node device according to claim 112 or 113, wherein
the processor is configured to generate data read signaling based on the first air interface signaling, wherein the data read signaling is used to instruct the data read operation on the ambient IoT device; and
the transmitter is configured to transmit the data read signaling to the ambient IoT device.

115. The intermediate node device according to claim 111, wherein
the receiver is configured to receive second air interface signaling from the network device, wherein the second air interface signaling is used to designate the intermediate node device for performing the data write operation on the ambient IoT device; and
the transmitter is configured to transmit the second air interface signaling to the ambient IoT device;
wherein the network device is configured to initiate the data write operation.

116. The intermediate node device according to claim 111, wherein
the transmitter is configured to transmit a second request signal to the network device, wherein the second request signal is used to request the data write operation on the ambient IoT device;
the receiver is configured to receive second air interface signaling from the network device, wherein the second air interface signaling is used to designate the intermediate node device for performing the data write operation on the ambient IoT device; and
the transmitter is further configured to transmit the second air interface signaling to the ambient IoT device;
wherein the intermediate node device is used to initiate the data write operation.

117. The intermediate node device according to claim 111, wherein
the receiver is configured to receive second air interface signaling from the network device, wherein the second air interface signaling is used to designate the network device and the intermediate node device for performing the data write operation on the ambient IoT device; and
the transmitter is configured to transmit the second air interface signaling to the ambient IoT device.

118. The intermediate node device according to claim 115 or 116, wherein
the processor is configured to write second data to the ambient IoT device based on the second air interface signaling.

119. The intermediate node device according to claim 117, wherein
the processor is configured to write third data to the ambient IoT device based on the second air interface signaling.

120. The intermediate node device according to any one of claims 109 to 119, wherein
the receiver is configured to receive at least one of data or a feedback message from the ambient IoT device, wherein the feedback message is used to indicate a result of at least one of the data read operation or the data write operation on the ambient IoT device; and
the transmitter is configured to transmit at least one of the data or the feedback message to the network device.

121. A computer-readable storage medium, storing one or more executable instructions, wherein the one or more executable instructions, when loaded and executed by a processor, cause the processor to perform the communication method for the ambient IoT device as defined in any one of claims 1 to 40.

122. A chip, comprising programmable logic circuitry or one or more programs, wherein the chip is configured to perform the communication method for the ambient IoT device as defined in any one of claims 1 to 40 based on the programmable logic circuitry or the one or more programs.

123. A computer program product, comprising one or more computer instructions stored in a computer-readable storage medium,
wherein the one or more computer instructions, when read by a processor of a communication device from the computer-readable storage medium and executed by the processor, cause the communication device to perform the communication method for the ambient IoT device as defined in any one of claims 1 to 40.
